(19) Europäisches Patentamt
European Patent Office
Office européen des brevets

(11) **EP 2 913 792 A1**

(12) **EUROPÄISCHE PATENTANMELDUNG**

(43) Veröffentlichungstag:
02.09.2015 Patentblatt 2015/36

(51) Int Cl.:
***G06Q 30/06*** (2012.01)   ***G07C 5/00*** (2006.01)
***G06Q 30/02*** (2012.01)

(21) Anmeldenummer: 14157140.6

(22) Anmeldetag: **28.02.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Deutsche Telekom AG**
**53113 Bonn (DE)**

(72) Erfinder:
• **Willenbrock, Ralf**
**60487 Frankfurt (DE)**

• **Ayyildiz, Kemal**
**100026 Chaoyang District (CN)**
• **Funk, Marcus Andreas**
**10243 Berlin (DE)**

(74) Vertreter: **Klinski, Robert**
**Patentship**
**Patentanwaltsgesellschaft mbH**
**Elsenheimerstraße 65**
**80687 München (DE)**

(54) **Verfahren zum Erfassen einer Bewegungscharakteristik eines Fahrzeugs**

(57) Die Erfindung betrifft ein Verfahren (100) zum Erfassen einer Bewegungscharakteristik eines Fahrzeugs, mit einem Erfassen (101) eines Geschwindigkeitsverlaufs des Fahrzeugs innerhalb eines vorbestimmten Zeitintervalls, einem Bestimmen (103) einer Anzahl von auf das Fahrzeug einwirkenden Kräften auf der Basis des Geschwindigkeitsverlaufs des Fahrzeugs und zumindest eines physikalischen Fahrzeugparameters, einem Bestimmen (105) einer Fahrzeugenergie auf der Basis der Anzahl der auf das Fahrzeug einwirkenden Kräfte innerhalb des vorbestimmten Zeitintervalls, und einem Vergleichen (107) der Fahrzeugenergie des Fahrzeugs mit einer Referenzenergie, um die Bewegungscharakteristik des Fahrzeugs innerhalb des vorbestimmten Zeitintervalls zu erfassen.

Fig. 1

EP 2 913 792 A1

**Beschreibung**

TECHNISCHES GEBIET

Die vorliegende Erfindung betrifft das Gebiet der Verkehrstelematik.

TECHNISCHER HINTERGRUND

Bei Logistik- und Verkehrsunternehmen werden Verkehrstelematiksysteme eingesetzt, um einen Kraftstoffverbrauch sowie $CO_2$ Emissionen eines Fahrzeugs, beispielsweise eines Personenkraftwagens (Pkw), eines Lastkraftwagens (Lkw) oder eines Busses, zu erfassen.

Die Messung des Kraftstoffverbrauchs eines Fahrzeugs erfolgt dabei mittels spezieller Messsensorik, welche den Füllstand des Kraftstoffs in einem Kraftstoffbehälter des Fahrzeugs misst. Der Kraftstoffverbrauch, beispielsweise der gemittelte Kraftstoffverbrauch pro Sekunde oder der gemittelte Kraftstoffverbrauch pro Fahrstrecke, kann von dem Verkehrstelematiksystem erfasst und dem Fahrer des Fahrzeugs auf einem Display im Fahrzeug anzeigt werden. Der Einsatz von Verkehrstelematiksystemen ist dabei mit hohen Investitions- und Betriebskosten verbunden, weshalb viele Unternehmen auf den Einsatz von Verkehrstelematiksystemen verzichten und den durchschnittlichen Kraftstoffverbrauch allein auf Basis von Tankquittungen ermitteln.

Darüber hinaus kann der gemittelte Kraftstoffverbrauch keinen Hinweis über die einzelnen Ursachen des Kraftstoffverbrauchs liefern, da weder der Einfluss der Straßen- und Verkehrsverhältnisse, noch der Einfluss des individuellen Beschleunigungs- und Bremsverhaltens des Fahrers einzeln quantitativ erfasst und bewertet werden kann. Daraus resultieren Unsicherheiten bezüglich möglicher Einsparpotenziale und Reduktionsstrategien des Kraftstoffverbrauchs und der $CO_2$ Emissionen für ein Fahrzeug oder eine Fahrzeugflotte.

BESCHREIBUNG DER ERFINDUNG

Es ist daher die Aufgabe der vorliegenden Erfindung, ein effizientes Konzept zum Erfassen von Ursachen eines Kraftstoffverbrauchs eines Fahrzeugs zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch ein Erfassen einer Bewegungscharakteristik eines Fahrzeugs gelöst werden kann. Die Bewegungscharakteristik kann auf Basis eines Geschwindigkeitsverlaufs des Fahrzeugs erfasst werden, wobei auf das Fahrzeug einwirkende Kräfte bestimmt werden können, welche ursächlich für den Kraftstoffverbrauch des Fahrzeugs sind. Die auf das Fahrzeug einwirkenden Kräfte können beispielsweise eine Beschleunigungskraft des Fahrzeugs, eine Bremskraft des Fahrzeugs, eine Luftwiderstandskraft des Fahrzeugs oder eine Rollwiderstandskraft des Fahrzeugs umfassen.

Auf Grundlage der auf das Fahrzeug einwirkenden Kräfte kann eine Fahrzeugenergie bestimmt werden, welche mit einer Referenzenergie verglichen werden kann. Darüber hinaus kann für jede auf das Fahrzeug einwirkende Kraft eine Teilenergie bestimmt werden, welche mit einer Referenzteilenergie verglichen werden kann. Die Referenzenergie oder die Referenzteilenergie kann beispielsweise aus einem Referenzgeschwindigkeitsverlauf eines Referenzfahrzyklus abgeleitet werden. Dadurch wird erreicht, dass eine Ursache eines Kraftstoffverbrauchs des Fahrzeugs, beispielweise eine Beschleunigung des Fahrzeugs oder ein Luftwiderstand des Fahrzeugs, einzeln erfasst werden kann.

Der Geschwindigkeitsverlauf des Fahrzeugs kann durch ein mobiles Kommunikationsgerät, beispielsweise ein Mobiltelefon oder Smartphone, im Fahrzeug erfasst werden. Das Erfassen der Bewegungscharakteristik des Fahrzeugs kann unabhängig durch das mobile Kommunikationsgerät durchgeführt werden. Das mobile Kommunikationsgerät kann ferner über ein Kommunikationsnetzwerk mit einer Datenverarbeitungseinrichtung verbunden sein. Das Erfassen der Bewegungscharakteristik des Fahrzeugs kann in diesem Fall durch die Datenverarbeitungseinrichtung in Verbindung mit dem mobilen Kommunikationsgerät durchgeführt werden. Das Kommunikationsnetzwerk kann beispielsweise das Internet sein.

Gemäß einem ersten Aspekt betrifft die Erfindung ein Verfahren zum Erfassen einer Bewegungscharakteristik eines Fahrzeugs, mit einem Erfassen eines Geschwindigkeitsverlaufs des Fahrzeugs innerhalb eines vorbestimmten Zeitintervalls, einem Bestimmen einer Anzahl von auf das Fahrzeug einwirkenden Kräften auf der Basis des Geschwindigkeitsverlaufs des Fahrzeugs und zumindest eines physikalischen Fahrzeugparameters, einem Bestimmen einer Fahrzeugenergie auf der Basis der Anzahl der auf das Fahrzeug einwirkenden Kräfte innerhalb des vorbestimmten Zeitintervalls, und einem Vergleichen der Fahrzeugenergie des Fahrzeugs mit einer Referenzenergie, um die Bewegungscharakteristik des Fahrzeugs innerhalb des vorbestimmten Zeitintervalls zu erfassen. Dadurch wird der Vorteil erreicht, dass ein effizientes Konzept zum Erfassen von Ursachen eines Kraftstoffverbrauchs eines Fahrzeugs realisiert werden kann.

Das Fahrzeug kann beispielsweise ein Personenkraftwagen, ein Lastkraftwagen oder ein Bus sein. Das Fahrzeug kann ferner ein Schienenfahrzeug sein.

Der Geschwindigkeitsverlauf des Fahrzeugs kann die Augenblicksgeschwindigkeit des Fahrzeugs in Abhängigkeit von der Zeit repräsentieren. Das vorbestimmte Zeitintervall kann beispielsweise eine Zeitdauer von 1 Sekunde, 2 Sekunden, 5 Sekunden, 10 Sekunden, 20 Sekunden, 50 Sekunden, 60 Sekunden oder 80 Sekunden aufweisen. Das vorbestimmte Zeitintervall kann eine konstante Zeitdauer aufweisen. Das vorbestimmte Zeitintervall kann gleitend innerhalb des Geschwindigkeitsverlaufs des Fahrzeugs verschoben werden.

Die auf das Fahrzeug einwirkenden Kräfte können beispielsweise eine Beschleunigungskraft des Fahrzeugs, eine Bremskraft des Fahrzeugs, eine Luftwiderstandskraft des Fahrzeugs oder eine Rollwiderstandskraft des Fahrzeugs umfassen. Die auf das Fahrzeug einwirkenden Kräfte können auf Basis zumindest eines physikalischen Fahrzeugparameters bestimmt werden. Die auf das Fahrzeug einwirkenden Kräfte können ferner unter Verwendung von Umweltparametern, beispielsweise einer Erdbeschleunigungskonstante oder einer Luftdichte, bestimmt werden.

Der zumindest eine physikalische Fahrzeugparameter kann beispielsweise eine Masse des Fahrzeugs, einen Vortriebskoeffizienten des Fahrzeugs, eine Querschnittsfläche des Fahrzeugs, einen Luftwiderstandsbeiwert des Fahrzeugs, oder einen Rollreibungskoeffizienten des Fahrzeugs umfassen.

Die Fahrzeugenergie kann mittels einer Integration eines Produktes der auf das Fahrzeug einwirkenden Kräfte und des Geschwindigkeitsverlaufs des Fahrzeugs über das vorbestimmte Zeitintervall bestimmt werden. Die Referenzenergie kann vorgegeben oder vorgespeichert sein. Die Referenzenergie kann aus einem Referenzgeschwindigkeitsverlauf bestimmt werden.

Die Bewegungscharakteristik des Fahrzeugs kann eine Abweichung der Fahrzeugenergie von der Referenzenergie umfassen.

Gemäß einer Ausführungsform umfasst die Anzahl der auf das Fahrzeug einwirkenden Kräfte zumindest eine der folgenden Kräfte: eine Beschleunigungskraft, wobei der Fahrzeugparameter eine Masse des Fahrzeugs umfasst, eine Bremskraft, wobei der Fahrzeugparameter eine Masse des Fahrzeugs und einen Vortriebskoeffizienten des Fahrzeugs umfasst, eine Luftwiderstandskraft, wobei der Fahrzeugparameter eine Querschnittsfläche des Fahrzeugs und einen Luftwiderstandsbeiwert des Fahrzeugs umfasst, und/oder eine Rollwiderstandskraft, wobei der Fahrzeugparameter eine Masse des Fahrzeugs und einen Rollreibungskoeffizienten des Fahrzeugs umfasst. Dadurch wird der Vorteil erreicht, dass jene Kräfte berücksichtigt werden können, welche die Bewegungscharakteristik des Fahrzeugs beeinflussen.

Die Beschleunigungskraft kann als Produkt der Masse des Fahrzeugs und einer zeitlichen Ableitung des Geschwindigkeitsverlaufs des Fahrzeugs für steigende Geschwindigkeiten bestimmt werden. Die Bremskraft kann als Produkt des Vortriebskoeffizienten des Fahrzeugs, der Masse des Fahrzeugs und einer zeitlichen Ableitung des Geschwindigkeitsverlaufs des Fahrzeugs für fallende Geschwindigkeiten bestimmt werden.

Die Luftwiderstandskraft kann als Produkt eines Faktors von 1/2, einer Luftdichte, der Querschnittsfläche des Fahrzeugs, des Luftwiderstandsbeiwerts des Fahrzeugs und eines quadrierten Geschwindigkeitsverlaufs des Fahrzeugs bestimmt werden. Die Rollwiderstandskraft kann als Produkt der Masse des Fahrzeugs, des Rollreibungskoeffizienten des Fahrzeugs, einer Erdbeschleunigungskonstante und des Geschwindigkeitsverlaufs des Fahrzeugs bestimmt werden.

Die Masse des Fahrzeugs, der Vortriebskoeffizient des Fahrzeugs, die Querschnittsfläche des Fahrzeugs, der Luftwiderstandsbeiwert des Fahrzeugs und der Rollreibungskoeffizient des Fahrzeugs können vorbestimmt oder vorgespeichert sein.

Gemäß einer Ausführungsform umfasst das Erfassen des Geschwindigkeitsverlaufs des Fahrzeugs innerhalb des vorbestimmten Zeitintervalls ein Erfassen eines geographischen Höhenverlaufs des Fahrzeugs innerhalb des vorbestimmten Zeitintervalls, wobei die Anzahl der auf das Fahrzeug einwirkenden Kräfte eine Steigungskraft umfasst, wobei die Steigungskraft auf Basis des geographischen Höhenverlaufs des Fahrzeugs und einer Masse des Fahrzeugs bestimmt wird, und wobei die Fahrzeugenergie ferner auf der Basis der Steigungskraft innerhalb des vorbestimmten Zeitintervalls bestimmt wird. Dadurch wird der Vorteil erreicht, dass eine Steigung und/oder ein Gefälle der Fahrstrecke bei der Bestimmung der Fahrzeugenergie berücksichtigt werden kann.

Der geographische Höhenverlauf des Fahrzeugs kann die potentielle Energie des Fahrzeugs repräsentieren. Auf Grundlage des geographischen Höhenverlaufs des Fahrzeugs kann ein Steigungswinkel einer schiefen Ebene bestimmt werden.

Die Steigungskraft kann als Produkt der Masse des Fahrzeugs, einer Erdbeschleunigungskonstante und einem Sinuswert des Steigungswinkels bestimmt werden.

Gemäß einer Ausführungsform umfasst die Fahrzeugenergie eine Fahrzeugstillstandenergie. Dadurch wird der Vorteil erreicht, dass eine Verlustenergie des Fahrzeugs bei Stillstand des Fahrzeugs bei der Bestimmung der Fahrzeugenergie berücksichtigt werden kann. Die Fahrzeugstillstandenergie kann vorbestimmt oder vorgespeichert sein.

Gemäß einer Ausführungsform wird im Schritt des Bestimmens der Fahrzeugenergie für jede auf das Fahrzeug einwirkende Kraft eine Teilenergie bestimmt, oder wird im Schritt des Bestimmens der Fahrzeugenergie eine Gesamtenergie für eine Summe der auf das Fahrzeug einwirkenden Kräfte bestimmt. Dadurch wird der Vorteil erreicht, dass eine Teilenergie oder eine Gesamtenergie mit der Referenzenergie verglichen werden kann.

Gemäß einer Ausführungsform umfasst das Bestimmen der Fahrzeugenergie innerhalb des vorbestimmten Zeitintervalls ein Bestimmen einer Fahrstrecke des Fahrzeugs innerhalb des vorbestimmten Zeitintervalls auf der Basis des Geschwindigkeitsverlaufs des Fahrzeugs, wobei das Bestimmen der Fahrzeugenergie innerhalb des vorbestimmten Zeitintervalls ferner ein Gewichten der Fahrzeugenergie mit der Fahrstrecke umfasst. Dadurch wird der Vorteil erreicht, dass die Fahrzeugenergie auf die Fahrstrecke normiert werden kann.

Die Fahrstrecke kann beispielsweise 1 Meter, 2 Meter, 5 Meter, 8 Meter, 10 Meter, 20 Meter, 50 Meter, 80 Meter, 100 Meter, 200 Meter, 500 Meter, 800 Meter oder 1000 Meter betragen. Die Fahrstrecke kann mittels einer Integration des Geschwindigkeitsverlaufs des Fahrzeugs über das vorbestimmte Zeitintervall bestimmt werden.

Gemäß einer Ausführungsform umfasst das Verfahren ein Bereitstellen eines vorbestimmten Referenzgeschwindigkeitsverlaufs des Fahrzeugs innerhalb eines vorbestimmten Referenzzeitintervalls, ein Bestimmen einer Anzahl von auf das Fahrzeug einwirkenden Referenzkräften auf der Basis des Referenzgeschwindigkeitsverlaufs des Fahrzeugs und zumindest eines physikalischen Fahrzeugparameters, und ein Bestimmen der Referenzenergie auf der Basis der Anzahl der auf das Fahrzeug einwirkenden Referenzkräfte innerhalb des vorbestimmten Referenzzeitintervalls. Dadurch wird der Vorteil erreicht, dass die Referenzenergie aus einem Referenzgeschwindigkeitsverlauf bestimmt werden kann.

Der vorbestimmte Referenzgeschwindigkeitsverlauf des Fahrzeugs kann vorgespeichert sein. Der vorbestimmte Referenzgeschwindigkeitsverlauf kann durch einen vorbestimmten Referenzfahrzyklus gebildet werden. Das vorbestimmte Referenzzeitintervall kann beispielsweise eine Zeitdauer von 1 Sekunde, 2 Sekunden, 5 Sekunden, 10 Sekunden, 20 Sekunden, 50 Sekunden, 60 Sekunden, 80 Sekunden, 100 Sekunden, 120 Sekunden, 150 Sekunden, 160 Sekunden, 180 Sekunden, 200 Sekunden, 250 Sekunden, 300 Sekunden, 350 Sekunden oder 400 Sekunden aufweisen. Die Zeitdauer des vorbestimmten Referenzzeitintervalls und die Zeitdauer des vorbestimmten Zeitintervalls können gleich oder unterschiedlich sein.

Die auf das Fahrzeug einwirkenden Referenzkräfte können auf Grundlage des vorbestimmten Referenzgeschwindigkeitsverlaufs analog zu den auf das Fahrzeug einwirkenden Kräften auf Grundlage des erfassten Geschwindigkeitsverlaufs des Fahrzeugs bestimmt werden. Dabei können dieselben physikalischen Fahrzeugparameter für die Bestimmung der Referenzkräfte wie für die Bestimmung der Kräfte eingesetzt werden.

Gemäß einer Ausführungsform wird im Schritt des Bestimmens der Referenzenergie für jede auf das Fahrzeug einwirkende Referenzkraft eine Referenzteilenergie bestimmt, oder wird im Schritt des Bestimmens der Referenzenergie eine Referenzgesamtenergie für eine Summe der auf das Fahrzeug einwirkenden Referenzkräfte bestimmt. Dadurch wird der Vorteil erreicht, dass die Fahrzeugenergie mit einer Referenzteilenergie oder einer Referenzgesamtenergie verglichen werden kann.

Gemäß einer Ausführungsform umfasst das Bestimmen der Referenzenergie innerhalb des vorbestimmten Referenzzeitintervalls ein Bestimmen einer Referenzfahrstrecke des Fahrzeugs innerhalb des vorbestimmten Referenzzeitintervalls auf der Basis des Referenzgeschwindigkeitsverlaufs des Fahrzeugs, wobei das Bestimmen der Referenzenergie innerhalb des vorbestimmten Referenzzeitintervalls ferner ein Gewichten der Referenzenergie mit der Referenzfahrstrecke umfasst. Dadurch wird der Vorteil erreicht, dass die Referenzenergie auf die Referenzfahrstrecke normiert werden kann.

Die Referenzfahrstrecke kann beispielsweise 1 Meter, 2 Meter, 5 Meter, 8 Meter, 10 Meter, 20 Meter, 50 Meter, 80 Meter, 100 Meter, 200 Meter, 500 Meter, 800 Meter, 1000 Meter, 2000 Meter, 5000 Meter oder 10000 Meter betragen. Die Referenzfahrstrecke kann mittels einer Integration des Referenzgeschwindigkeitsverlaufs des Fahrzeugs über das vorbestimmte Referenzzeitintervall bestimmt werden.

Gemäß einer Ausführungsform wird der vorbestimmte Referenzgeschwindigkeitsverlauf durch einen vorbestimmten Referenzfahrzyklus gebildet, wobei der Referenzfahrzyklus einen der folgenden Fahrzyklen umfasst: einen städtischen Fahrzyklus, einen außerstädtischer Fahrzyklus, oder einen Fahrzyklus mit konstanter Geschwindigkeit. Dadurch wird der Vorteil erreicht, dass das Erfassen der Bewegungscharakteristik des Fahrzeugs auf Basis eines Fahrzyklus möglich wird.

Der vorbestimmte Referenzfahrzyklus kann durch nationale oder internationale Normen, beispielsweise die europäische Richtlinie 70/220/EWG, definiert sein. Der vorbestimmte Referenzfahrzyklus kann ferner frei definiert sein und beispielsweise auf Durchschnittswerten früher erfasster Geschwindigkeitsverläufe basieren.

Der städtische Fahrzyklus kann einen Referenzgeschwindigkeitsverlauf für städtische Gebiete repräsentieren. Der städtische Fahrzyklus kann beispielsweise ein Urban Driving Cycle (UDC), ein Federal Test Procedure 75 (FTP-75) Fahrzyklus, oder ein 10-15 Mode Fahrzyklus sein.

Der außerstädtische Fahrzyklus kann einen Referenzgeschwindigkeitsverlauf für außerstädtische Gebiete repräsentieren. Der außerstädtische Fahrzyklus kann beispielsweise ein Extra Urban Driving Cycle (EUDC) oder ein Highway Fuel Economy Driving Schedule (HWFET) Fahrzyklus sein.

Der Fahrzyklus mit konstanter Geschwindigkeit kann einen Referenzgeschwindigkeitsverlauf für Verkehr auf Schnellstraßen oder Autobahnen repräsentieren.

Gemäß einer Ausführungsform umfasst das Bereitstellen des vorbestimmten Referenzgeschwindigkeitsverlaufs des Fahrzeugs ein Auswählen des vorbestimmten Referenzgeschwindigkeitsverlaufs aus einer Mehrzahl von vorbestimmten Referenzgeschwindigkeitsverläufen in Abhängigkeit von dem erfassten Geschwindigkeitsverlauf des Fahrzeugs. Dadurch wird der Vorteil erreicht, dass der vorbestimmte Referenzgeschwindigkeitsverlauf dynamisch in Abhängigkeit von dem erfassten Geschwindigkeitsverlaufs des Fahrzeugs verändert werden kann.

Die Mehrzahl der vorbestimmten Referenzgeschwindigkeitsverläufe kann vorgespeichert sein. Das Auswählen des vorbestimmten Referenzgeschwindigkeitsverlaufs aus der Mehrzahl von vorbestimmten Referenzgeschwindigkeitsverläufen kann auf Basis eines Vergleichs des erfassten Geschwindigkeitsverlaufs des Fahrzeugs mit der Mehrzahl von vorbestimmten Referenzgeschwindigkeitsverläufen durchgeführt werden.

Gemäß einer Ausführungsform umfasst der zumindest eine physikalische Fahrzeugparameter einen der folgenden Fahrzeugparameter: eine Masse des Fahrzeugs, einen Vortriebskoeffizienten des Fahrzeugs, eine Querschnittsfläche des Fahrzeugs, einen Luftwiderstandsbeiwert des Fahrzeugs, oder einen Rollreibungskoeffizienten des Fahrzeugs. Dadurch wird der Vorteil erreicht, dass jene physikalischen Fahrzeugparameter berücksichtigt werden können, welche die Bewegungscharakteristik des Fahrzeugs beeinflussen.

Die Masse des Fahrzeugs, der Vortriebskoeffizient des Fahrzeugs, die Querschnittsfläche des Fahrzeugs, der Luftwiderstandsbeiwert des Fahrzeugs und der Rollreibungskoeffizient des Fahrzeugs können vorbestimmt oder vorgespeichert sein.

Gemäß einer Ausführungsform ist der Fahrzeugenergie des Fahrzeugs ein Kraftstoffverbrauch des Fahrzeugs zugeordnet, wobei der Referenzenergie ein Referenzkraftstoffverbrauch zugeordnet ist, und wobei das Vergleichen der Fahrzeugenergie des Fahrzeugs mit der Referenzenergie ein Vergleichen des Kraftstoffverbrauchs des Fahrzeugs mit dem Referenzkraftstoffverbrauch umfasst, um eine Kraftstoffverbrauchscharakteristik des Fahrzeugs zu erfassen. Dadurch wird der Vorteil erreicht, dass auf Basis der Erfassung der Bewegungscharakteristik des Fahrzeugs eine Kraftstoffverbrauchscharakteristik des Fahrzeugs erfasst werden kann.

Der Kraftstoffverbrauch des Fahrzeugs kann aus der Fahrzeugenergie unter Verwendung eines Brennwerts eines Kraftstoffs bestimmt werden. Der Referenzkraftstoffverbrauch kann aus der Referenzenergie unter Verwendung eines Brennwerts eines Kraftstoffs bestimmt werden. Der Kraftstoff kann beispielsweise ein Benzinkraftstoff oder ein Dieselkraftstoff sein.

Die Kraftstoffverbrauchscharakteristik kann eine Abweichung des Kraftstoffverbrauchs des Fahrzeugs von dem Referenzkraftstoffverbrauch umfassen.

Gemäß einem zweiten Aspekt betrifft die Erfindung ein mobiles Kommunikationsgerät zum Erfassen einer Bewegungscharakteristik eines Fahrzeugs, mit einer Erfassungseinrichtung, welche ausgebildet ist, einen Geschwindigkeitsverlauf des Fahrzeugs innerhalb eines vorbestimmten Zeitintervalls zu erfassen, und einem Prozessor, welcher ausgebildet ist, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen. Dadurch wird der Vorteil erreicht, dass ein effizientes Konzept zum Erfassen von Ursachen eines Kraftstoffverbrauchs eines Fahrzeugs realisiert werden kann.

Das mobile Kommunikationsgerät kann ein Mobiltelefon oder ein Smartphone sein. Das mobile Kommunikationsgerät kann Teil eines Verkehrstelematiksystems des Fahrzeugs sein.

Die Erfassungseinrichtung kann den Geschwindigkeitsverlauf des Fahrzeugs innerhalb des vorbestimmten Zeitintervalls erfassen. Die Erfassungseinrichtung kann beispielsweise ein Satellitennavigationsempfänger eines Satellitennavigationssystems, beispielsweise eines Global Positioning System (GPS) Satellitennavigationssystems oder eines Galileo Satellitennavigationssystems, sein. Die Erfassungseinrichtung kann ferner ein Beschleunigungs- und/oder Lagesensor sein. Der Prozessor kann ausgebildet sein, ein Computerprogramm auszuführen.

Das Verfahren zum Erfassen einer Bewegungscharakteristik eines Fahrzeugs kann mittels des mobilen Kommunikationsgerätes durchgeführt werden. Weitere Merkmale des mobilen Kommunikationsgerätes resultieren unmittelbar aus der Funktionalität des Verfahrens zum Erfassen einer Bewegungscharakteristik eines Fahrzeugs.

Gemäß einem dritten Aspekt betrifft die Erfindung eine Datenverarbeitungseinrichtung zum Erfassen einer Bewegungscharakteristik eines Fahrzeugs, wobei die Datenverarbeitungseinrichtung mit einem mobilen Kommunikationsgerät über ein Kommunikationsnetzwerk verbindbar ist, wobei das mobile Kommunikationsgerät ausgebildet ist, einen Geschwindigkeitsverlauf des Fahrzeugs innerhalb eines vorbestimmten Zeitintervalls zu erfassen, wobei das mobile Kommunikationsgerät ferner ausgebildet ist, den Geschwindigkeitsverlauf des Fahrzeugs über das Kommunikationsnetzwerk an die Datenverarbeitungseinrichtung zu übertragen, mit einer Kommunikationsschnittstelle, welche ausgebildet ist, den Geschwindigkeitsverlauf des Fahrzeugs von dem mobilen Kommunikationsgerät über das Kommunikationsnetzwerk zu empfangen, und einem Prozessor, welcher ausgebildet ist, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen. Dadurch wird der Vorteil erreicht, dass ein effizientes Konzept zum Erfassen von Ursachen eines Kraftstoffverbrauchs eines Fahrzeugs realisiert werden kann.

Die Datenverarbeitungseinrichtung kann ein Server sein. Die Kommunikationsschnittstelle kann eine drahtgebundene Kommunikationsschnittstelle sein. Der Prozessor kann ausgebildet sein, ein Computerprogramm auszuführen.

Das Verfahren zum Erfassen einer Bewegungscharakteristik eines Fahrzeugs kann mittels der Datenverarbeitungseinrichtung durchgeführt werden. Weitere Merkmale der Datenverarbeitungseinrichtung resultieren unmittelbar aus der Funktionalität des Verfahrens zum Erfassen einer Bewegungscharakteristik eines Fahrzeugs.

Gemäß einer Ausführungsform umfasst die Datenverarbeitungseinrichtung eine Datenbank, wobei die Datenbank ausgebildet ist, einen vorbestimmten Referenzgeschwindigkeitsverlauf des Fahrzeugs innerhalb eines vorbestimmten Referenzzeitintervalls bereitzustellen, wobei der Prozessor ferner ausgebildet ist, eine Anzahl von auf das Fahrzeug einwirkenden Referenzkräften auf der Basis des Referenzgeschwindigkeitsverlaufs des Fahrzeugs und zumindest eines physikalischen Fahrzeugparameters zu bestimmen, und die Referenzenergie auf der Basis der Anzahl der auf das Fahrzeug einwirkenden Referenzkräfte innerhalb des vorbestimmten Referenzzeitintervalls zu bestimmen. Dadurch wird der Vorteil erreicht, dass die Referenzenergie aus einem Referenzgeschwindigkeitsverlauf bestimmt werden kann.

Die Datenbank kann ferner den erfassten Geschwindigkeitsverlauf des Fahrzeugs speichern, die auf das Fahrzeug einwirkenden Kräfte speichern, die bestimmte Fahrzeugenergie speichern, die bestimmte Referenzenergie speichern, und/oder zumindest einen der physikalischen Fahrzeugparameter bereitstellen.

Gemäß einer Ausführungsform ist der Prozessor ferner ausgebildet, eine Abweichung der Fahrzeugenergie des Fahrzeugs von der Referenzenergie zu bestimmen, um ein Abweichungsmaß zu erhalten, wobei die Kommunikationsschnittstelle ferner ausgebildet ist, das Abweichungsmaß über das Kommunikationsnetzwerk an das mobile Kommunikationsgerät auszusenden. Dadurch wird der Vorteil erreicht, dass das Abweichungsmaß unter Verwendung des mobilen Kommunikationsgerätes einem Fahrer des Fahrzeugs angezeigt werden kann.

Die Abweichung der Fahrzeugenergie des Fahrzeugs von der Referenzenergie kann eine absolute Abweichung der Fahrzeugenergie des Fahrzeugs von der Referenzenergie oder eine relative Abweichung der Fahrzeugenergie des Fahrzeugs von der Referenzenergie umfassen. Die Abweichung kann mit einem vorbestimmten Schwellwert verglichen werden, um das Abweichungsmaß zu erhalten. Das Abweichungsmaß kann ein diskretes Abweichungsmaß sein.

Gemäß einem vierten Aspekt betrifft die Erfindung ein System zum Erfassen einer Bewegungscharakteristik eines Fahrzeugs, mit einer Datenverarbeitungseinrichtung zum Erfassen einer Bewegungscharakteristik eines Fahrzeugs, und einem mobilen Kommunikationsgerät, welches ausgebildet ist, einen Geschwindigkeitsverlauf des Fahrzeugs innerhalb eines vorbestimmten Zeitintervalls zu erfassen, und den Geschwindigkeitsverlauf des Fahrzeugs über ein Kommunikationsnetzwerk an die Datenverarbeitungseinrichtung zu übertragen. Dadurch wird der Vorteil erreicht, dass ein effizientes Konzept zum Erfassen von Ursachen eines Kraftstoffverbrauchs eines Fahrzeugs realisiert werden kann.

Das Verfahren zum Erfassen einer Bewegungscharakteristik eines Fahrzeugs kann mittels des Systems durchgeführt werden. Weitere Merkmale des Systems resultieren unmittelbar aus der Funktionalität des Verfahrens zum Erfassen einer Bewegungscharakteristik eines Fahrzeugs.

Gemäß einer Ausführungsform umfasst das mobile Kommunikationsgerät eine Kommunikationsschnittstelle, wobei die Kommunikationsschnittstelle ausgebildet ist, über das Kommunikationsnetzwerk mit der Datenverarbeitungseinrichtung zu kommunizieren. Dadurch wird der Vorteil erreicht, dass das Übertragen des Geschwindigkeitsverlaufs des Fahrzeugs an die Datenverarbeitungseinrichtung effizient durchgeführt werden kann.

Die Kommunikationsschnittstelle kann eine Mobilfunkkommunikationsschnittstelle sein. Die Kommunikationsschnittstelle kann ausgebildet sein, zumindest einen der physikalischen Fahrzeugparameter und/oder die Referenzenergie über das Kommunikationsnetzwerk von der Datenverarbeitungseinrichtung zu empfangen.

Gemäß einer Ausführungsform umfasst das mobile Kommunikationsgerät einen Prozessor, wobei der Prozessor ausgebildet ist, die Anzahl von auf das Fahrzeug einwirkenden Kräften auf der Basis des Geschwindigkeitsverlaufs des Fahrzeugs und zumindest eines physikalischen Fahrzeugparameters zu bestimmen, wobei die Kommunikationsschnittstelle ausgebildet ist, die Anzahl von auf das Fahrzeug einwirkenden Kräften über das Kommunikationsnetzwerk an die Datenverarbeitungseinrichtung zu übertragen. Dadurch wird der Vorteil erreicht, dass die Bestimmung der Anzahl von auf das Fahrzeug einwirkenden Kräften durch das mobile Kommunikationsgerät durchgeführt werden kann.

Gemäß einer Ausführungsform ist der Prozessor ferner ausgebildet, die Fahrzeugenergie auf der Basis der Anzahl der auf das Fahrzeug einwirkenden Kräfte innerhalb des vorbestimmten Zeitintervalls zu bestimmen, wobei die Kommunikationsschnittstelle ferner ausgebildet ist, die Fahrzeugenergie über das Kommunikationsnetzwerk an die Datenverarbeitungseinrichtung zu übertragen. Dadurch wird der Vorteil erreicht, dass die Bestimmung der Fahrzeugenergie durch das mobile Kommunikationsgerät durchgeführt werden kann.

Gemäß einem fünften Aspekt betrifft die Erfindung ein Computerprogramm mit einem Programmcode zum Ausführen des Verfahrens zum Erfassen einer Bewegungscharakteristik eines Fahrzeugs, wenn der Programmcode auf einem Computer ausgeführt wird. Dadurch wird der Vorteil erreicht, dass das Verfahren automatisiert ausgeführt werden kann.

Der Programmcode kann mittels des Prozessors des mobilen Kommunikationsgerätes und/oder mittels des Prozessors der Datenverarbeitungseinrichtung ausgeführt werden. Der Programmcode kann in maschinen-lesbarer Form vorliegen.

Die Erfindung kann in Hardware und/oder Software realisiert werden.

BESCHREIBUNG DER FIGUREN

Weitere Ausführungsbeispiele werden bezugnehmend auf die beiliegenden Zeichnungen näher erläutert. Es zeigen:

Fig. 1 ein schematisches Diagramm eines Verfahrens zum Erfassen einer Bewegungscharakteristik eines Fahrzeugs gemäß einer Ausführungsform;

Fig. 2 ein schematisches Diagramm eines mobilen Kommunikationsgerätes zum Erfassen einer Bewegungscharakteristik eines Fahrzeugs gemäß einer Ausführungsform;

Fig. 3 ein schematisches Diagramm eines Systems zum Erfassen einer Bewegungscharakteristik eines Fahrzeugs mit einer Datenverarbeitungseinrichtung und einem mobilen Kommunikationsgerät gemäß einer Ausführungsform;

Fig. 4 ein schematisches Diagramm eines vorbestimmten Referenzfahrzyklus gemäß einer Ausführungsform;

Fig. 5 ein schematisches Diagramm eines vorbestimmten Referenzfahrzyklus gemäß einer Ausführungsform;

Fig. 6 ein schematisches Diagramm mit einem erfassten Geschwindigkeitsverlauf und einem Referenzgeschwindigkeitsverlauf sowie eine Tabelle mit einem Vergleich von Teilenergien mit Referenzteilenergien gemäß einer Ausführungsform; und

Fig. 7 ein schematisches Diagramm mit einem erfassten Geschwindigkeitsverlauf und einem Referenzgeschwindigkeitsverlauf sowie eine Tabelle mit einem Vergleich von Teilenergien mit Referenzteilenergien gemäß einer Ausführungsform.

DETAILIERTE BESCHREIBUNG DER FIGUREN

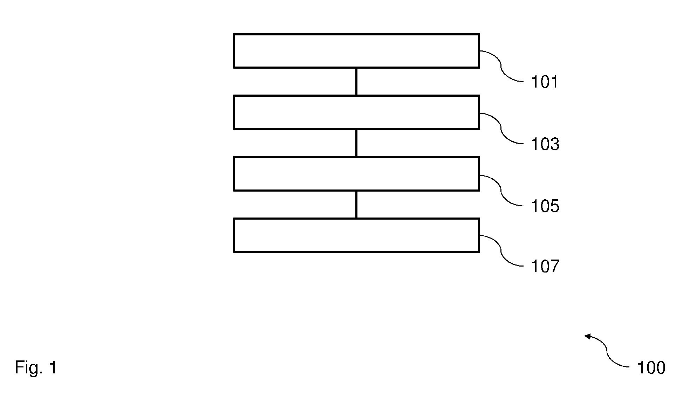

Fig. 1 zeigt ein schematisches Diagramm eines Verfahrens 100 zum Erfassen einer Bewegungscharakteristik eines Fahrzeugs gemäß einer Ausführungsform.

Das Verfahren 100 umfasst ein Erfassen 101 eines Geschwindigkeitsverlaufs des Fahrzeugs innerhalb eines vorbestimmten Zeitintervalls, ein Bestimmen 103 einer Anzahl von auf das Fahrzeug einwirkenden Kräften auf der Basis des Geschwindigkeitsverlaufs des Fahrzeugs und zumindest eines physikalischen Fahrzeugparameters, ein Bestimmen 105 einer Fahrzeugenergie auf der Basis der Anzahl der auf das Fahrzeug einwirkenden Kräfte innerhalb des vorbestimmten Zeitintervalls, und ein Vergleichen 107 der Fahrzeugenergie des Fahrzeugs mit einer Referenzenergie, um die Bewegungscharakteristik des Fahrzeugs innerhalb des vorbestimmten Zeitintervalls zu erfassen.

Das Fahrzeug kann beispielsweise ein Personenkraftwagen, ein Lastkraftwagen oder ein Bus sein. Das Fahrzeug kann ferner ein Schienenfahrzeug sein.

Der Geschwindigkeitsverlauf des Fahrzeugs kann die Augenblicksgeschwindigkeit des Fahrzeugs in Abhängigkeit von der Zeit repräsentieren. Das vorbestimmte Zeitintervall kann beispielsweise eine Zeitdauer von 1 Sekunde, 2 Sekunden, 5 Sekunden, 10 Sekunden, 20 Sekunden, 50 Sekunden, 60 Sekunden oder 80 Sekunden aufweisen. Das vorbestimmte Zeitintervall kann eine konstante Zeitdauer aufweisen. Das vorbestimmte Zeitintervall kann gleitend innerhalb des Geschwindigkeitsverlaufs des Fahrzeugs verschoben werden.

Die auf das Fahrzeug einwirkenden Kräfte können beispielsweise eine Beschleunigungskraft des Fahrzeugs, eine Bremskraft des Fahrzeugs, eine Luftwiderstandskraft des Fahrzeugs oder eine Rollwiderstandskraft des Fahrzeugs umfassen. Die auf das Fahrzeug einwirkenden Kräfte können auf Basis zumindest eines physikalischen Fahrzeugparameters bestimmt werden. Die auf das Fahrzeug einwirkenden Kräfte können ferner unter Verwendung von Umweltparametern, beispielsweise einer Erdbeschleunigungskonstante oder einer Luftdichte, bestimmt werden.

Der zumindest eine physikalische Fahrzeugparameter kann beispielsweise eine Masse des Fahrzeugs, einen Vortriebskoeffizienten des Fahrzeugs, eine Querschnittsfläche des Fahrzeugs, einen Luftwiderstandsbeiwert des Fahrzeugs, oder einen Rollreibungskoeffizienten des Fahrzeugs umfassen.

Die Fahrzeugenergie kann mittels einer Integration eines Produktes der auf das Fahrzeug einwirkenden Kräfte und des Geschwindigkeitsverlaufs des Fahrzeugs über das vorbestimmte Zeitintervall bestimmt werden. Die Referenzenergie kann vorgegeben oder vorgespeichert sein. Die Referenzenergie kann aus einem Referenzgeschwindigkeitsverlauf bestimmt werden.

Die Bewegungscharakteristik des Fahrzeugs kann eine Abweichung der Fahrzeugenergie von der Referenzenergie umfassen.

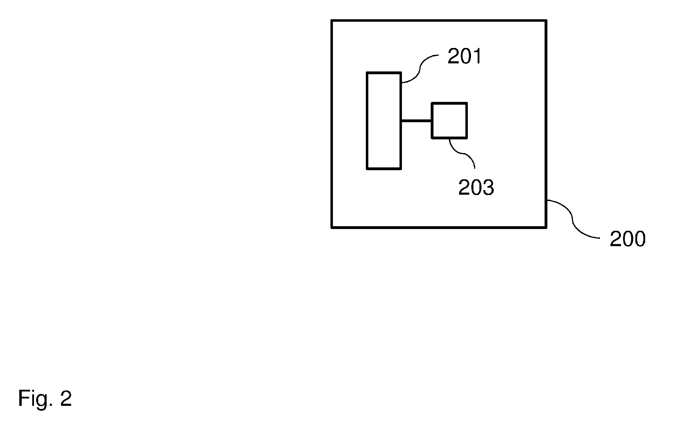

Fig. 2 zeigt ein schematisches Diagramm eines mobilen Kommunikationsgerätes 200 zum Erfassen einer Bewegungscharakteristik eines Fahrzeugs gemäß einer Ausführungsform.

Das mobile Kommunikationsgerät 200 umfasst eine Erfassungseinrichtung 201, welche ausgebildet ist, einen Geschwindigkeitsverlauf des Fahrzeugs innerhalb eines vorbestimmten Zeitintervalls zu erfassen, und einen Prozessor 203, welcher ausgebildet ist, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen.

Das mobile Kommunikationsgerät 200 kann ein Mobiltelefon oder ein Smartphone sein. Das mobile Kommunikationsgerät 200 kann Teil eines Verkehrstelematiksystems des Fahrzeugs sein.

Die Erfassungseinrichtung 201 kann den Geschwindigkeitsverlauf des Fahrzeugs innerhalb des vorbestimmten Zeitintervalls erfassen. Die Erfassungseinrichtung 201 kann beispielsweise ein Satellitennavigationsempfänger eines Satellitennavigationssystems, beispielsweise eines Global Positioning System (GPS) Satellitennavigationssystems oder eines Galileo Satellitennavigationssystems, sein. Die Erfassungseinrichtung 201 kann ferner ein Beschleunigungs- und/oder Lagesensor sein. Der Prozessor 203 kann ausgebildet sein, ein Computerprogramm auszuführen.

Das Verfahren 100 aus Fig. 1 zum Erfassen einer Bewegungscharakteristik eines Fahrzeugs kann mittels des mobilen Kommunikationsgerätes 200 durchgeführt werden. Weitere Merkmale des mobilen Kommunikationsgerätes 200 resultieren unmittelbar aus der Funktionalität des Verfahrens 100 aus Fig. 1 zum Erfassen einer Bewegungscharakteristik eines Fahrzeugs.

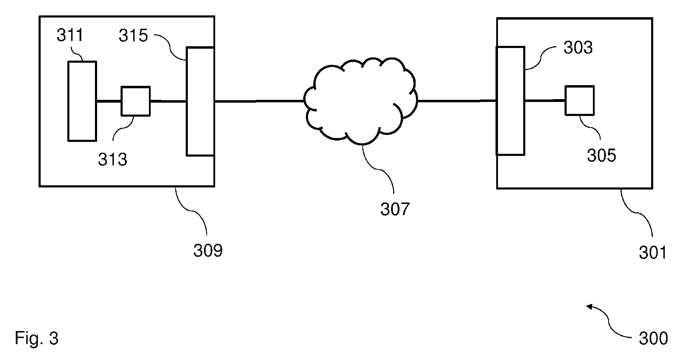

Fig. 3 zeigt ein schematisches Diagramm eines Systems 300 zum Erfassen einer Bewegungscharakteristik eines Fahrzeugs mit einer Datenverarbeitungseinrichtung 301 und einem mobilen Kommunikationsgerät 309 gemäß einer Ausführungsform.

Die Datenverarbeitungseinrichtung 301 umfasst eine Kommunikationsschnittstelle 303 und einen Prozessor 305. Die Datenverarbeitungseinrichtung 301 kann ein Server sein. Die Kommunikationsschnittstelle 303 kann eine drahtgebundene Kommunikationsschnittstelle sein. Der Prozessor 305 kann ausgebildet sein, ein Computerprogramm auszuführen.

Das mobile Kommunikationsgerät 309 umfasst eine Erfassungseinrichtung 311, einen Prozessor 313 und eine Kommunikationsschnittstelle 315. Das mobile Kommunikationsgerät 309 kann ein Mobiltelefon oder ein Smartphone sein. Das mobile Kommunikationsgerät 309 kann Teil eines Verkehrstelematiksystems des Fahrzeugs sein. Die Erfassungseinrichtung 311 kann den Geschwindigkeitsverlauf des Fahrzeugs innerhalb des vorbestimmten Zeitintervalls erfassen. Die Erfassungseinrichtung 311 kann beispielsweise ein Satellitennavigationsempfänger eines Satellitennavigationssystems, beispielsweise eines Global Positioning System (GPS) Satellitennavigationssystems oder eines Galileo Satellitennavigationssystems, sein. Die Erfassungseinrichtung 311 kann ferner ein Beschleunigungs- und/oder Lagesensor sein. Der Prozessor 313 kann ausgebildet sein, ein Computerprogramm auszuführen. Die Kommunikationsschnittstelle 315 kann eine Mobilfunkkommunikationsschnittstelle sein.

Die Kommunikationsschnittstelle 303 der Datenverarbeitungseinrichtung 301 ist mit der Kommunikationsschnittstelle 315 des mobilen Kommunikationsgerätes 309 über ein Kommunikationsnetzwerk 307 verbunden. Das Kommunikationsnetzwerk 307 kann das Internet sein.

Das mobile Kommunikationsgerät 309 ist ausgebildet, einen Geschwindigkeitsverlauf des Fahrzeugs innerhalb eines vorbestimmten Zeitintervalls mittels der Erfassungseinrichtung 311 zu erfassen, den Geschwindigkeitsverlauf des Fahrzeugs über den Prozessor 313 an die Kommunikationsschnittstelle 315 weiterzuleiten, und den Geschwindigkeitsverlauf des Fahrzeugs mittels der Kommunikationsschnittstelle 315 über das Kommunikationsnetzwerk 307 an die Datenverarbeitungseinrichtung 301 zu übertragen.

Die Datenverarbeitungseinrichtung 301 ist zum Erfassen der Bewegungscharakteristik des Fahrzeugs vorgesehen. Die Kommunikationsschnittstelle 303 ist ausgebildet, den Geschwindigkeitsverlauf des Fahrzeugs von dem mobilen Kommunikationsgerät 309 über das Kommunikationsnetzwerk 307 zu empfangen. Der Prozessor 305 ist ausgebildet, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen.

Gemäß einer Ausführungsform ist der Prozessor 313 ausgebildet, die Anzahl von auf das Fahrzeug einwirkenden Kräften auf der Basis des Geschwindigkeitsverlaufs des Fahrzeugs und zumindest eines physikalischen Fahrzeugparameters zu bestimmen, wobei die Kommunikationsschnittstelle 315 ausgebildet ist, die Anzahl von auf das Fahrzeug einwirkenden Kräften über das Kommunikationsnetzwerk 307 an die Datenverarbeitungseinrichtung 301 zu übertragen. Die Kommunikationsschnittstelle 315 kann ausgebildet sein, zumindest einen der physikalischen Fahrzeugparameter über das Kommunikationsnetzwerk 307 von der Datenverarbeitungseinrichtung 301 zu empfangen. Dadurch kann eine Vorverarbeitung des erfassten Geschwindigkeitsverlaufs des Fahrzeugs durch das mobile Kommunikationsgerät 309 realisiert werden, um die Anzahl der auf das Fahrzeug einwirkenden Kräfte zu erhalten.

Gemäß einer Ausführungsform ist der Prozessor 313 ferner ausgebildet, die Fahrzeugenergie auf der Basis der Anzahl der auf das Fahrzeug einwirkenden Kräfte innerhalb des vorbestimmten Zeitintervalls zu bestimmen, wobei die Kommunikationsschnittstelle 315 ferner ausgebildet ist, die Fahrzeugenergie über das Kommunikationsnetzwerk 307 an die Datenverarbeitungseinrichtung 301 zu übertragen. Dadurch kann eine Vorverarbeitung der Anzahl der auf das Fahrzeug einwirkenden Kräfte innerhalb des vorbestimmten Zeitintervalls durch das mobile Kommunikationsgerät 309 realisiert werden, um die Fahrzeugenergie zu erhalten.

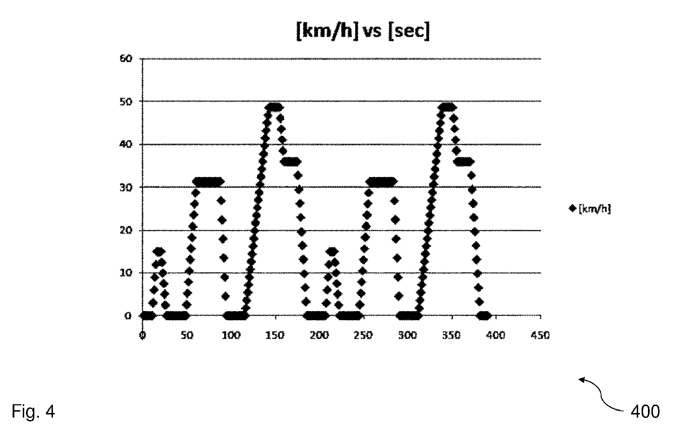

Fig. 4 zeigt ein schematisches Diagramm 400 eines vorbestimmten Referenzfahrzyklus gemäß einer Ausführungsform. Der vorbestimmte Referenzfahrzyklus ist ein städtischer Fahrzyklus, ein ECE (Economic Comission for Europe) Fahrzyklus oder ein UDC (Urban Driving Cycle).

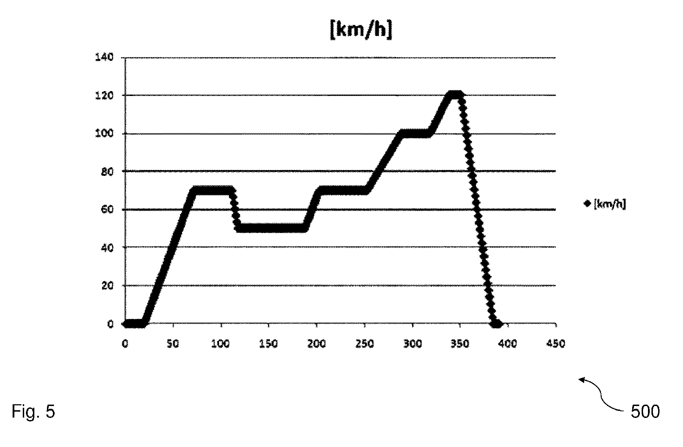

Fig. 5 zeigt ein schematisches Diagramm 500 eines vorbestimmten Referenzfahrzyklus gemäß einer Ausführungsform. Der vorbestimmte Referenzfahrzyklus ist ein außerstädtischer Fahrzyklus, ein ECE (Economic Comission for Europe) Fahrzyklus oder ein EUDC (Extra Urban Driving Cycle).

Ein effizientes Konzept zum Erfassen von Ursachen eines Kraftstoffverbrauchs eines Fahrzeugs kann unter Verwendung eines mobilen Kommunikationsgerätes, beispielsweise eines Smartphones, eines Telematik-Endgerätes, oder eines Navigationssystems mit Mobilfunkanbindung, gegebenenfalls ausgerüstet mit einem Satellitennavigationsempfänger, realisiert werden.

Der Kraftstoffverbrauch von Fahrzeugen wird im motorisierten Individualverkehr (MIV) in den Fahrzeugzulassungspapieren für den Stadtverkehr und den Überlandverkehr ausgewiesen. Zu diesem Zweck werden Motoren auf einem Prüfstand nach einem genormten Geschwindigkeitsfahrzyklus abgefahren und der Kraftstoffverbrauch sowie die $CO_2$ Emissionen gemessen. Der städtische Fahrzyklus kann beispielsweise ein UDC (Urban Driving Cycle) sein und der außerstädtische Fahrzyklus kann beispielsweise ein EUDC (Extra Urban Driving Cycle) sein.

Der erfasste Geschwindigkeitsverlauf bei einer Fahrt kann gegenüber diesen Referenzfahrzyklen oder Normfahrzyklen auf physikalische Abweichungen untersucht werden. Daraus lassen sich Handlungsempfehlungen zur Veränderung des Fahrverhaltens oder der Fahrtplanung für Logistik- und Verkehrsunternehmen ableiten. Zudem kann das Verfahren dazu genutzt werden, um sparsames Fahrverhalten zu erkennen und einen Flottenkraftstoffverbrauch insgesamt zu senken.

Physikalisch bestimmt sich der Kraftstoffverbrauch eines Fahrzeugs aus der Arbeit, die aufgebracht wird, um ein stehendes Fahrzeug auf eine Geschwindigkeit $v$ zu beschleunigen und anschließend gegen die Trägheits- und Fahrwiderstände in Bewegung zu halten. Dabei können vier einwirkende Kräfte oder Trägheitswiderstände entgegen der Fahrtrichtung wirken, während der Kraftstoffverbrauch im Stillstand oder Leerlauf des Fahrzeugs über ein vorbestimmtes Zeitintervall oder eine Fahrzeit als konstanter Wert zum Gesamtverbrauch hinzugerechnet werden kann. Die einwirkenden Kräfte oder Trägheitswiderstände umfassen beispielsweise Brems- und Beschleunigungskräfte, eine Rollwiderstandskraft, eine Luftwiderstandskraft, und/oder eine Steigungskraft aufgrund einer Steigung oder eines Gefälles der Fahrstrecke.

Diese Kräfte können eine Funktion der Geschwindigkeit sein und unter Verwendung konstanter physikalischer Fahrzeugparameter bestimmt werden. Da eine Erfassungseinrichtung, beispielsweise ein Satellitennavigationsempfänger, die Geschwindigkeit des Fahrzeugs bestimmen kann, ist es möglich, die einwirkenden Kräfte oder Trägheitswiderstände relativ zu den Referenzfahrzyklen UDC oder EUDC zu bestimmen und zu vergleichen.

Für die Bestimmung des Gesamtkraftstoffverbrauchs $\Phi$ eines Fahrzeugs vom Beginn bis zum Ende einer Fahrt kann folgende Gleichung verwendet werden:

$$\Phi(v) = \eta b_e \frac{\int_o^T \left(F_a + B_r + F_\mu + F_{air} + F_g\right) v dt}{\int_o^T v dt} + STS = \left[\frac{L}{100km}\right] = \left[b_e \frac{MJ}{100km}\right]$$

wobei $\eta$ einen Wirkungsgrad, $b_e$ einen Brennwert des Kraftstoffs, $F_a$ eine Beschleunigungskraft, $B_r$ eine Bremskraft, $F_\mu$ eine Rollwiderstandskraft, $F_{air}$ eine Luftwiderstandskraft, $F_g$ eine Steigungskraft, STS einen Stillstandverbrauch des Fahrzeugs, und $v$ einen erfassten Geschwindigkeitsverlauf des Fahrzeugs darstellt.

Die Gleichung kann eine mathematische Grundlage zur Bestimmung des Energie- und Kraftstoffverbrauchs des Fahrzeugs bilden. Dabei steht der Parameter η für den Wirkungsgrad und beschreibt die Tatsache, dass ein Motor des Fahrzeugs nicht nur physikalische Bewegungsenergie aufbringt, sondern auch innere, thermodynamische Verluste des Motors ausgleicht. Der Wirkungsgrad für Verbrennungsmotoren kann im Bereich zwischen 25% und 50% liegen. In Abhängigkeit von der Zylinderanzahl und vom Motortyp kann der Wirkungsgrad bei Motoren für Lastkraftwagen höher sein als bei Motoren für Personenkraftwagen.

Der Faktor $b_e$ beschreibt den Brennwert des verwendeten Kraftstoffs und bezieht sich damit auf die Kraftstoffart, beispielsweise Diesel- oder Benzinkraftstoffe. Der Brennwert kann in Mega-Joule pro Liter angegeben werden und bei Dieselkraftstoff etwa bei 35,7 MJ/L und bei Benzinkraftstoff etwa bei 31,8 MJ/L liegen. Bei der Umrechnung auf eine Fahrstrecke von 100 km können sich für 1000 Mega-Newton bei einem Benzinmotor 12 L/100km und bei einem Dieselmotor 6 L/100km aufgrund der höheren Motoreffizienz bei Dieselmotoren ergeben.

Im Folgenden sind physikalische Relationen angegeben, auf deren Grundlage die auf ein Fahrzeug einwirkenden Kräfte, die Fahrzeugenergie und/oder die Teilenergien bestimmt werden können.

Die physikalischen Relationen umfassen einwirkende Kräfte oder Trägheitskräfte zur Bestimmung des Kraftstoffverbrauchs, wobei die einwirkenden Kräfte oder Trägheitskräfte einer Bewegung des Fahrzeugs entgegengesetzt wirken können.

$$\Phi(v) = \eta b_e \frac{\int_o^T (F_{acc} + F_{brake} + F_{roll} + F_{air} + F_G)v(1s)dt}{\int_o^{T'} v(1s)dt}$$

$$F_{acc} = m \cdot \frac{dv}{dt}, dv > 0$$

$$F_{brake} = \beta m \cdot \frac{dv}{dt}, dv < 0$$

$$F_{air} = \frac{\rho}{2} \cdot A c_w v^2$$

$$F_{roll} = m(\mu g)v$$

$$F_G = mg \cdot sin(\alpha)$$

wobei $\Phi$ einen Gesamtkraftstoffverbrauch, $F_{acc}$ eine Beschleunigungskraft, $F_{brake}$ eine Bremskraft, $F_{roll}$ eine Rollwiderstandskraft, $F_{air}$ eine Luftwiderstandskraft, $F_G$ eine Steigungskraft, $v$ einen erfassten Geschwindigkeitsverlauf des Fahrzeugs, T und T' ein vorbestimmtes Zeitintervall, h einen Wirkungsgrad, $b_e$ einen Brennwert des Kraftstoffs in MJ/Liter, m eine Masse des Fahrzeugs, $\beta$ einen Vortriebskoeffizienten des Fahrzeugs, $\mu$ einen Rollreibungskoeffizienten des Fahrzeugs, g eine Erdbeschleunigungskonstante, $\rho$ eine Luftdichte oder eine Luftwiderstandskonstante, A eine Querschnittsfläche des Fahrzeugs, $c_w$ einen Luftwiderstandsbeiwert des Fahrzeugs, und $\alpha$ einen Steigungswinkel der Fahrstrecke darstellt.

Eine auf eine Fahrstrecke normierte Fahrzeugenergie $E_{dist}$ lässt sich beispielsweise anhand der folgenden Gleichung bestimmen:

$$E.dist = \frac{\int(\vec{F}_{acc} - \vec{F}_{roll} - \vec{F}_{aero})vdt}{\int vdt} \ in \ [\frac{l}{m}]$$

wobei $F_{acc}$ eine Beschleunigungskraft, $F_{roll}$ eine Rollwiderstandskraft und $F_{aero}$ eine Luftwiderstandskraft und $v$ einen er-

fassten Geschwindigkeitsverlauf des Fahrzeugs darstellt.

Eine relative Abweichung zwischen einer auf eine Fahrstecke normierten Fahrzeugenergie $E_{real}$ und einer auf eine Referenzfahrstrecke normierten Referenzenergie $E_{cycle}$ lässt sich beispielsweise anhand der folgenden Gleichung bestimmen:

$$\frac{E.real}{E.cycle} = \frac{\int(\vec{F}_{acc} - \vec{F}_{roll} - \vec{F}_{aero})vdt}{\int(\vec{F'}_{acc} - \vec{F'}_{roll} - \vec{F'}_{aero})v'dt} * \frac{\int v'dt}{\int vdt} \; in \; [\%]$$

wobei $F_{acc}$ eine Beschleunigungskraft, $F_{roll}$ eine Rollwiderstandskraft, $F_{aero}$ eine Luftwiderstandskraft, $v$ einen erfassten Geschwindigkeitsverlauf, $F'_{acc}$ eine Referenzbeschleunigungskraft, $F'_{roll}$ eine Referenzrollwiderstandskraft, $F'_{aero}$ eine Referenzluftwiderstandskraft, und $v'$ einen Referenzgeschwindigkeitsverlauf darstellt.

Ein relativer Einfluss von Bremsverlusten lässt sich beispielsweise anhand der folgenden Gleichung berücksichtigen:

$$\frac{E.real}{E.cycle} = 100\% + \frac{\alpha \frac{d}{dt}\left(\frac{m}{2}v^2\right)}{F.roll + F.aero} \; in \; [\%]$$

wobei $v$ einen erfassten Geschwindigkeitsverlauf, $m$ eine Masse des Fahrzeugs, $F_{roll}$ eine Rollwiderstandskraft, $F_{aero}$ eine Luftwiderstandskraft, und $\alpha$ eine Bremskonstante darstellt.

Die physikalischen Fahrzeugparameter zur Bestimmung der auf ein Fahrzeug einwirkenden Kräfte, der Fahrzeugenergie und/oder der Teilenergien sind im Folgenden exemplarisch zusammengefasst.

Typische Fahrzeugparameter für einen Personenkraftwagen (Pkw) aus dem motorisierten Individualverkehr (MIV) sind: eine Masse von 1705 kg, ein Rollreibungskoeffizient von 0,015, ein Luftwiderstandsbeiwert von 0,35, eine Querschnittsfläche von 2,35 m², eine Motoreffizienz von 0,25, einen Stillstandkraftstoffverbrauch von 1 l/h oder 8826, ein Brennwert des Kraftstoffs von 31,8 MJ/l, und ein Kraftstoffemissionsfaktor von 2,40 kg/l. Zudem kann eine Luftdichte von 1,204 kg/m³, eine Erdbeschleunigungskonstante von 9,81 m/s², ein Vortriebskoeffizient von -0,1472, ein Vortriebsverlustanteil von 3, und eine konstante Geschwindigkeit für einen Fahrzyklus von 90 km/h angenommen werden.

Typische Fahrzeugparameter für einen Lastkraftwagen (Lkw) mit einer Masse von 10t aus dem Nutzfahrzeugbereich sind: eine Masse von 10000 kg, ein Rollreibungskoeffizient von 0,008, ein Luftwiderstandsbeiwert von 0,8, eine Querschnittsfläche von 7 m², eine Motoreffizienz von 0,5, einen Stillstandkraftstoffverbrauch von 2,5 l/h oder 24792, ein Brennwert des Kraftstoffs von 35,7 MJ/l, und ein Kraftstoffemissionsfaktor von 2,40 kg/l. Zudem kann eine Luftdichte von 1,204 kg/m³, eine Erdbeschleunigungskonstante von 9,81 m/s², ein Vortriebskoeffizient von -0,0785, ein Vortriebsverlustanteil von 3, und eine konstante Geschwindigkeit für einen Fahrzyklus von 90 km/h angenommen werden.

Die auf das Fahrzeug einwirkenden Kräfte und Fahrzeugenergien können unter Verwendung der Gleichungen bestimmt werden. Dabei können die physikalischen Fahrzeugparameter verwendet werden. Die einwirkenden Kräfte können aus Geschwindigkeiten bestimmt werden, welche mittels einer Erfassungseinrichtung, beispielsweise unter Verwendung eines Satellitennavigationsempfängers, erfasst werden können. Zudem kann eine Summe gebildet und anschließend eine Normierung auf die gefahrene Strecke durchgeführt werden.

Die folgende Tabelle zeigt eine exemplarische Zusammenstellung der Zeit, der Zeitdifferenz, der Beschleunigung eines Fahrzeugs, der Geschwindigkeit eines Fahrzeugs in m/s und km/h, sowie der differentiellen und summierten Fahrstrecke eines Fahrzeugs. Die Zusammenstellung betrifft einen Personenkraftwagen (Pkw).

| Time [s] | Delta t [s] | Accl [m/s^2] | Speed [m/s] | Speed [km/h] | Dist [m] | Sum Dist [m] |
|---|---|---|---|---|---|---|
| 0 | | 0 | 0 | 0,00 | 0 | 0 |
| 1 | 1 | 0 | 0 | 0,00 | 0 | 0 |
| 2 | 1 | 0 | 0 | 0,00 | 0 | 0 |
| 3 | 1 | 0 | 0 | 0,00 | 0 | 0 |
| 4 | 1 | 0 | 0 | 0,00 | 0 | 0 |
| 5 | 1 | 0 | 0 | 0,00 | 0 | 0 |
| 6 | 1 | 0 | 0 | 0,00 | 0 | 0 |

(fortgesetzt)

| Time [s] | Delta t [s] | Accl [m/s^2] | Speed [m/s] | Speed [km/h] | Dist [m] | Sum Dist [m] |
|---|---|---|---|---|---|---|
| 7 | 1 | 0 | 0 | 0,00 | 0 | 0 |
| 8 | 1 | 0 | 0 | 0,00 | 0 | 0 |
| 9 | 1 | 0 | 0 | 0,00 | 0 | 0 |
| 10 | 1 | 0 | 0 | 0,00 | 0 | 0 |
| 11 | 1 | 0 | 0 | 0,00 | 0 | 0 |
| 12 | 1 | 1,041666667 | 1,041666667 | 3,75 | 0,52083333 | 0,52083333 |
| 13 | 1 | 1,041666667 | 2,083333333 | 7,50 | 1,5625 | 2,08333333 |
| 14 | 1 | 1,041666667 | 3,125 | 11,25 | 2,60416667 | 4,6875 |
| 15 | 1 | 1,041666667 | 4,166666667 | 15,00 | 3,64583333 | 8,33333333 |

Die folgende Tabelle zeigt korrespondierend zur vorstehenden Tabelle exemplarisch die Bremsverzögerung des Fahrzeugs, die Beschleunigungsteilenergie des Fahrzeugs, die Bremsteilenergie des Fahrzeugs, die Rollwiderstandsteilenergie des Fahrzeugs, die Luftwiderstandsteilenergie des Fahrzeugs, eine Summe der Teilenergien des Fahrzeugs, eine Stillstandverlustenergie des Fahrzeugs, und eine akkumulierte Summe der Teilenergien zur Bestimmung der Gesamtenergie des Fahrzeugs.

| Vehicle 1-config items | [Ws/m] 261 | [Ws/m] 15 | [Ws/m] 251 | [Ws/m] 50 | | [Ws/m] 96 | [Ws/m] 672 672 |
|---|---|---|---|---|---|---|---|
| Brake[30% m/s^2] | ACC[W] | BRAKE[W] | Roll[W] | Air[W] | Sum | Sts 8826 | sum[W] |
| 0,0000 | 0 | 0 | 0 | 0 | 0 | 8826 | 8826 |
| 0,0000 | 0 | 0 | 0 | 0 | 0 | 8826 | 17653 |
| 0,0000 | 0 | 0 | 0 | 0 | 0 | 8826 | 26479 |
| 0,0000 | 0 | 0 | 0 | 0 | 0 | 8826 | 35306 |
| 0,0000 | 0 | 0 | 0 | 0 | 0 | 8826 | 44132 |
| 0,0000 | 0 | 0 | 0 | 0 | 0 | 8826 | 52958 |
| 0,0000 | 0 | 0 | 0 | 0 | 0 | 8826 | 61785 |
| 0,0000 | 0 | 0 | 0 | 0 | 0 | 8826 | 70611 |
| 0,0000 | 0 | 0 | 0 | 0 | 0 | 8826 | 79438 |
| 0,0000 | 0 | 0 | 0 | 0 | 0 | 8826 | 88264 |
| 0,0000 | 0 | 0 | 0 | 0 | 0 | 8826 | 97090 |
| 0,0000 | 1850 | 0 | 261 | 1 | 2112 | 0 | 99202 |
| 0,0000 | 3700 | 0 | 523 | 4 | 4227 | 0 | 103429 |
| 0,0000 | 5550 | 0 | 784 | 15 | 6349 | 0 | 109779 |
| 0,0000 | 7400 | 0 | 1045 | 36 | 8481 | 0 | 118260 |

Die folgende Tabelle zeigt eine weitere exemplarische Zusammenstellung der Zeit, der Zeitdifferenz, der Beschleunigung eines Fahrzeugs, der Geschwindigkeit eines Fahrzeugs in m/s und km/h, sowie der differentiellen und summierten Fahrstrecke eines Fahrzeugs. Die Zusammenstellung betrifft einen Lastkraftwagen (Lkw) mit einer Masse von 10t.

| Time [s] | Delta t [s] | Accl [m/s^2] | Speed [m/s] | Speed [km/h] | Dist [m] | Sum Dist [m] |
|---|---|---|---|---|---|---|
| 0 | | 0 | 0 | 0,00 | 0 | 0 |
| 1 | 1 | 0 | 0 | 0,00 | 0 | 0 |
| 2 | 1 | 0 | 0 | 0,00 | 0 | 0 |
| 3 | 1 | 0 | 0 | 0,00 | 0 | 0 |
| 4 | 1 | 0 | 0 | 0,00 | 0 | 0 |
| 5 | 1 | 0 | 0 | 0,00 | 0 | 0 |
| 6 | 1 | 0 | 0 | 0,00 | 0 | 0 |
| 7 | 1 | 0 | 0 | 0,00 | 0 | 0 |

(fortgesetzt)

| Time [s] | Delta t [s] | Accl [m/s^2] | Speed [m/s] | Speed [km/h] | Dist [m] | Sum Dist [m] |
|---|---|---|---|---|---|---|
| 8 | 1 | 0 | 0 | 0,00 | 0 | 0 |
| 9 | 1 | 0 | 0 | 0,00 | 0 | 0 |
| 10 | 1 | 0 | 0 | 0,00 | 0 | 0 |
| 11 | 1 | 0 | 0 | 0,00 | 0 | 0 |
| 12 | 1 | 1,041666667 | 1,041666667 | 3,75 | 0,520833 | 0,520833 |
| 13 | 1 | 1,041666667 | 2,083333333 | 7,50 | 1,5625 | 2,083333 |
| 14 | 1 | 1,041666667 | 3,125 | 11,25 | 2,604167 | 4,6875 |

Die folgende Tabelle zeigt korrespondierend zur vorstehenden Tabelle exemplarisch die Bremsverzögerung des Fahrzeugs, die Beschleunigungsteilenergie des Fahrzeugs, die Bremsteilenergie des Fahrzeugs, die Rollwiderstandsteilenergie des Fahrzeugs, die Luftwiderstandsteilenergie des Fahrzeugs, eine Summe der Teilenergien des Fahrzeugs, eine Stillstandverlustenergie des Fahrzeugs, und eine akkumulierte Summe der Teilenergien zur Bestimmung der Gesamtenergie des Fahrzeugs.

| Vehicle 2-config items | [Ws/m] 1530 | [Ws/m] 88 | [Ws/m] 785 | [Ws/m] 338 | | [Ws/m] 269 | [Ws/m] 3010 3010 |
|---|---|---|---|---|---|---|---|
| Brake [30% m/s^2] | ACC[W] | BRAKE[W] | Roll[W] | Air[W] | Sum | Sts 24792 | sum[W] |
| 0,0000 | 0 | 0 | 0 | 0 | 0 | 24792 | 24792 |
| 0,0000 | 0 | 0 | 0 | 0 | 0 | 24792 | 49583 |
| 0,0000 | 0 | 0 | 0 | 0 | 0 | 24792 | 74375 |
| 0,0000 | 0 | 0 | 0 | 0 | 0 | 24792 | 99167 |
| 0,0000 | 0 | 0 | 0 | 0 | 0 | 24792 | 123958 |
| 0,0000 | 0 | 0 | 0 | 0 | 0 | 24792 | 148750 |
| 0,0000 | 0 | 0 | 0 | 0 | 0 | 24792 | 173542 |
| 0,0000 | 0 | 0 | 0 | 0 | 0 | 24792 | 198333 |
| 0,0000 | 0 | 0 | 0 | 0 | 0 | 24792 | 223125 |
| 0,0000 | 0 | 0 | 0 | 0 | 0 | 24792 | 247917 |
| 0,0000 | 0 | 0 | 0 | 0 | 0 | 24792 | 272708 |
| 0,0000 | 10851 | 0 | 818 | 4 | 11672 | 0 | 284380 |
| 0,0000 | 21701 | 0 | 1635 | 30 | 23367 | 0 | 307747 |
| 0,0000 | 32552 | 0 | 2453 | 103 | 35107 | 0 | 342855 |

Das Verfahren bietet die Möglichkeit, quantifizierbare Ursachen für einen erhöhten oder verringerten Kraftstoffverbrauch des Fahrzeugs zu erkennen. Daraus kann ein Maßnahmenkatalog für Fahrertraining, Tourenoptimierung oder technische Inspektion abgeleitet werden.

Dies kann mittels einer regelmäßigen und automatischen Analyse von erfassten Geschwindigkeitsverläufen durch eine Datenverarbeitungseinrichtung oder einen Web-Server realisiert werden, welcher die prozentualen Beiträge der einzelnen Teilenergien bewerten und dadurch eine Zuordnung zu den Ursachen erhöhten oder verringerten Kraftstoffverbrauchs herleiten kann. Die Bestimmung des Kraftstoffverbrauchs kann unter Verwendung von Referenzfahrzyklen durchgeführt werden.

Unter Verwendung eines Abweichungsmaßes, beispielsweise in Form eines Ampelsystems mit den Farben Grün, Gelb und Rot, können eine Bewegungscharakteristik des Fahrzeugs oder ein Bewegungsmuster des Fahrzeugs erkennbar werden. Somit kann eine validierte Vorgehensweise zur Reduktion eines Kraftstoffverbrauchs, beispielsweise eines Fahrzeugflottengesamtverbrauchs, durch Vergleichen der einwirkenden Kräfte und/oder Teilenergien ermöglicht werden. Ferner kann ein Eco-Index bestimmt werden. Daraus lassen sich realistische Zielvorgaben für einzelne Fahrer und/oder die gesamte Fahrzeugflotte herleiten. Zudem lassen sich $CO_2$ Reduktionsziele und Kosteneinsparungen durch räumlich und/oder zeitlich zugeordnete Kraftstoffverbrauchsmuster bewerten.

Bei den Gleichungen kann eine Umrechnung zwischen den einzelnen Verbrauchseinheiten Liter pro 100 km, d.h. lph, Wattsekunde, und Joule pro Meter durchgeführt werden. Da die Energieeinheit Ws=Joule auf die gefahrene Strecke normiert werden kann, ergibt sich für den Referenzwert in Liter pro 100 km, d.h. lph, die Einheit Mega-Newton oder Mega-Joule pro 100 km. Physikalisch kann es sich bei Angaben auf Tankquittungen um auf Fahrstrecken normierte Kräfte oder Trägheitswiderstände handeln, welche ein Maß für die der Bewegung entgegen gerichteten externen Kräfte sein können.

Die folgende Tabelle zeigt eine exemplarische Zusammenstellung von Teilenergien und einer Gesamtenergie eines Fahrzeugs für einen Personenkraftwagen mit einer Masse von 2t. Als Referenzgeschwindigkeitsverlauf wurde ein UDC Referenzfahrzyklus gewählt. Die Zusammenstellung zeigt ferner einen prozentualen Teilenergieverbrauch oder einen prozentualen Teilkraftstoffverbrauch des Fahrzeugs.

| UDC | PKW(2t) | RPM | 1 | | |
|------|---------|-------|--------|------|------|
| [lph] | [Ws/m] | %ACC | %Roll | %Air | %Sts |
| 8,5 | 672 | 276 | 251 | 50 | 96 |
| | 100% | 41% | 37% | 7% | 14% |

Die folgende Tabelle zeigt eine exemplarische Zusammenstellung von Teilenergien und einer Gesamtenergie eines Fahrzeugs für einen Personenkraftwagen mit einer Masse von 2t. Als Referenzgeschwindigkeitsverlauf wurde ein EUDC Referenzfahrzyklus gewählt. Die Zusammenstellung zeigt ferner einen prozentualen Teilenergieverbrauch oder einen prozentualen Teilkraftstoffverbrauch des Fahrzeugs.

| EUDC | PKW(2t) | RPM | 0,8 | | |
|------|---------|-------|--------|------|------|
| [lph] | [Ws/m] | %ACC | %Roll | %Air | %Sts |
| 7,0 | 696 | 164 | 251 | 255 | 27 |
| | 100% | 24% | 36% | 37% | 4% |

Die folgende Tabelle zeigt eine exemplarische Zusammenstellung von Teilenergien und einer Gesamtenergie eines Fahrzeugs für einen Personenkraftwagen mit einer Masse von 2t. Als Referenzgeschwindigkeitsverlauf wurde ein Geschwindigkeitsverlauf mit einer konstanten Geschwindigkeit von 90 km/h gewählt. Die Zusammenstellung zeigt ferner einen prozentualen Teilenergieverbrauch oder einen prozentualen Teilkraftstoffverbrauch des Fahrzeugs.

| 90kph | PKW(2t) | RPM | 0,8 | | |
|-------|---------|-------|--------|------|------|
| [lph] | [Ws/m] | %ACC | %Roll | %Air | %Sts |
| 5,6 | 560 | 0 | 251 | 309 | 0 |
| | 100% | 0% | 45% | 55% | 0% |

Somit kann eine Analyse des Fahrverhaltens und der Straßenverhältnisse auf Basis der während der Fahrt auftretenden physikalischen Teilenergien, beispielsweise in Prozent vom Durchschnittswert, durchgeführt werden.

Ausgeprägt ist der hohe Anteil an Stillstands- und Beschleunigungsverlusten im Stadtverkehr bei einer Durchschnittsgeschwindigkeit von lediglich 18,7 km/h. Sowohl die einwirkenden Brems- und Beschleunigungskräfte bzw. -widerstände sowie die Stillstandzeiten des Fahrzeugs sollten daher minimiert werden. Dadurch kann deren prozentualer Anteil an den Energie- oder Kraftstoffverlusten gesenkt werden. Im Idealfall können die Teilenergien oder Verluste verursacht durch Beschleunigung und Stillstand gegen Null tendieren.

Im Vergleich dazu zeigen die Teilenergien der einwirkenden Kräfte oder Trägheitswiderstände im außerstädtischen Verkehr ein ausgeglichenes Verhältnis. Außerstädtischer Verkehr kann vor allem durch eine häufige Geschwindigkeitsreduktion aufgrund von Ortsdurchfahrten gekennzeichnet sein, welche ein Fahren mit einer konstanten Geschwindigkeit von beispielsweise 100 km/h erschweren können. Die Aerodynamik weist dabei einen hohen Anteil in der prozentualen Teilenergiebilanz auf, der den Anteil der Stillstandzeiten des Fahrzeugs aufwiegt.

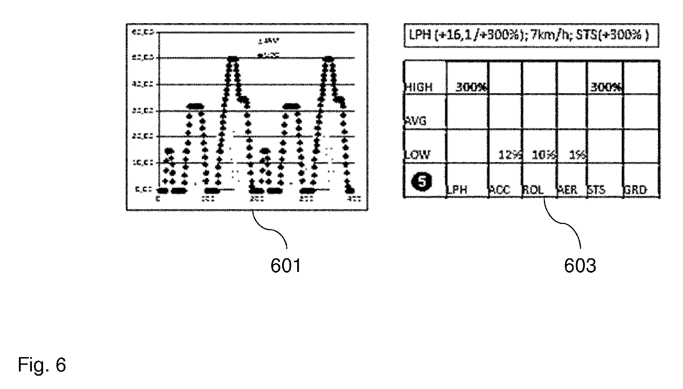

Fig. 6 zeigt ein schematisches Diagramm 601 mit einem erfassten Geschwindigkeitsverlauf und einem Referenzgeschwindigkeitsverlauf sowie eine Tabelle 603 mit einem Vergleich von Teilenergien mit Referenzteilenergien gemäß einer Ausführungsform. Die Energieabweichungen oder Energiemuster sind für einen Personenkraftwagen (Pkw) bei einem Stauereignis im Stadtverkehr angegeben.

Das Diagramm 601 zeigt den Referenzgeschwindigkeitsverlauf des Referenzfahrzyklus UDC im Vergleich zu einem erfassten Geschwindigkeitsverlauf mit einem Stauereignis, bei einer Durchschnittsgeschwindigkeit von 7 km/h.

Basierend auf den Gleichungen, ergibt sich bei einem solchen Geschwindigkeitsverlauf beispielsweise ein Mehrverbrauch von fast 16 Litern, also ein etwa 3-facher Verbrauch. Ein 3-facher Verbrauch kann ein Maximum bei Verwendung eines Verbrennungsmotors darstellen. Die physikalisch auftretende Energie kann also technisch begrenzt sein, auch wenn dies mathematisch nicht der Fall sein könnte.

Die Tabelle 603 zeigt Abweichungen einzelner Teilenergien von Referenzteilenergien. Die Zeile LOW bezieht sich auf eine prozentuale Abweichung von 0% bis 100% im Vergleich zum Referenzfahrzyklus. Die Zeile AVG oder MED bezieht sich auf eine prozentuale Abweichung von 100% bis 200% im Vergleich zum Referenzfahrzyklus. Die Zeile HIGH bezieht sich auf eine prozentuale Abweichung von 200% bis 300% im Vergleich zum Referenzfahrzyklus. Die Spalte LPH bezieht sich auf den Kraftstoffverbrauch in Liter pro 100km. Die Spalte ACC bezieht sich auf Brems- und Beschleunigungskräfte. Die Spalte ROL bezieht sich auf die Rollwiderstandskraft. Die Spalte AER bezieht sich auf die Luftwiderstandskraft oder Aerodynamik. Die Spalte STS bezieht sich auf einen Verlust bei Stillstand des Fahrzeugs. Die Spalte GRD bezieht sich auf eine Steigungskraft oder eine Gradientenkraft. Der Energieverlust bei Stillstand des Fahrzeugs weist einen hohen Anteil aufgrund von Stau im Stadtverkehr auf.

Ferner können die auf das Fahrzeug einwirkenden Kräfte oder Trägheitskräfte mit den auf das Fahrzeug einwirkenden Referenzkräften oder Referenzträgheitskräften verglichen werden. Die Abweichungen können sich auf die bestimmten Werte der Kräfte oder Trägheitswiderstände nach den Gleichungen relativ zu den Referenzfahrzyklen-Werten beziehen. Die Geschwindigkeit ist ebenfalls angegeben, um den Straßentyp, beispielsweise Stadtstraße, Überlandstraße oder Autobahn, unmittelbar erkennen zu können.

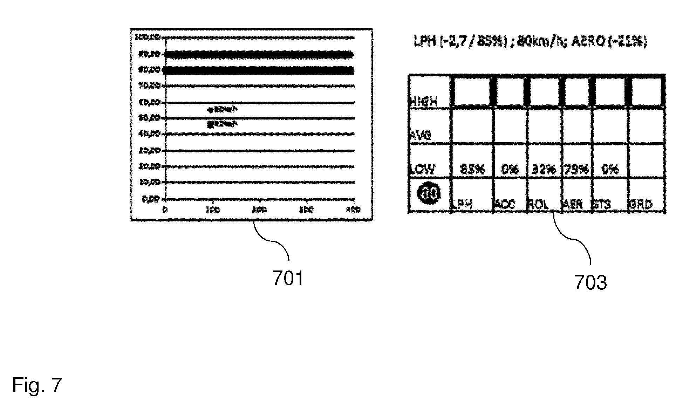

Fig. 7 zeigt ein schematisches Diagramm 701 mit einem erfassten Geschwindigkeitsverlauf und einem Referenzgeschwindigkeitsverlauf sowie eine Tabelle 703 mit einem Vergleich von Teilenergien mit Referenzteilenergien gemäß einer Ausführungsform. Die Energieabweichungen oder Energiemuster sind für einen Lastkraftwagen (Lkw) mit einer Masse von 10t ohne Beschleunigung und Stillstand bei einer Durchschnittsgeschwindigkeit von 80 km/h angegeben.

In Diagramm 701 wird eine Fahrt auf einer Autobahn mit einer konstanten Referenzgeschwindigkeit von 90 km/h relativ zu einer Fahrt mit einer konstanten Geschwindigkeit von 80 km/h verglichen. Der Einfluss der verringerten Aerodynamik ist sichtbar und ermöglicht eine Kraftstoffeinsparung von 2,7 Litern bei 100 km Fahrstrecke.

Die Tabelle 703 zeigt Abweichungen einzelner Teilenergien von Referenzteilenergien. Die Zeile LOW bezieht sich auf eine prozentuale Abweichung von 0% bis 100% im Vergleich zum Referenzfahrzyklus. Die Zeile AVG oder MED bezieht sich auf eine prozentuale Abweichung von 100% bis 200% im Vergleich zum Referenzfahrzyklus. Die Zeile HIGH bezieht sich auf eine prozentuale Abweichung von 200% bis 300% im Vergleich zum Referenzfahrzyklus. Die Spalte LPH bezieht sich auf den Kraftstoffverbrauch in Liter pro 100km. Die Spalte ACC bezieht sich auf Brems- und Beschleunigungskräfte. Die Spalte ROL bezieht sich auf die Rollwiderstandskraft. Die Spalte AER bezieht sich auf die Luftwiderstandskraft oder Aerodynamik. Die Spalte STS bezieht sich auf einen Verlust bei Stillstand des Fahrzeugs. Die Spalte GRD bezieht sich auf eine Steigungskraft oder eine Gradientenkraft.

Besonders bedeutend kann die Veränderung der prozentualen Anteile zwischen der Rollwiderstandskraft und der Luftwiderstandskraft oder Aerodynamik sein, wenn es sich um Nutzfahrzeuge handelt. Da die Masse des Fahrzeugs und der Ladung lediglich zu der Rollwiderstandskraft beitragen, nicht jedoch zur Luftwiderstandskraft oder Aerodynamik, kann es beim Vergleich von Personenkraftwagen (Pkw) und Lastkraftwagen (Lkw) zu einer deutlichen Verschiebung zwischen den beiden einwirkenden Kräften oder Trägheitskräften kommen. Bei einem vergleichsweise leichten Personenkraftwagen (Pkw) kann der Einfluss der Luftwiderstandskraft oder Aerodynamik bei einer Geschwindigkeit von 90 km/h gering sein, während der Lastkraftwagen (LKW) einen hohen Anteil durch die Luftwiderstandskraft oder aerodynamische Trägheitswiderstände im Gesamtverbrauch aufweisen kann.

Zur Nutzung des Verfahrens kann ein mobiles Kommunikationsgerät, gegebenenfalls in Verbindung mit einer Datenverarbeitungseinrichtung, eingesetzt werden. Der Vorteil des beschriebenen Verfahrens, bei dem Referenzfahrzyklen mit GPS/Galileo basierten Geschwindigkeitsverläufen in Echtzeit verglichen werden, besteht im Erfassen von komplementären Ursachen eines erhöhten Verbrauchs relativ zu einem bekannten Referenzverbrauch.

Lastkraftwagen (Lkw) mit einer Masse von 10t können im Normalbetrieb 30 bis 35 L/100km Dieselkraftstoff bei einer mittleren Ladungskapazität verbrauchen. Dabei ist jedoch unbekannt, wie viel davon auf Stau oder fahrtechnisch ungünstiges Brems- oder Beschleunigungsverhalten des Fahrers zurückzuführen ist. Auch der Einfluss von Gebirgen, Steigungen, Gefällen oder Wetter ist in der Regel nur als Abweichung pro Monat, nicht jedoch als Abweichung pro Fahrt relativ zu einem jeweiligen Referenzfahrzyklus bekannt.

Aus Fig. 6 und Fig. 7 geht hervor, dass die Ursachen für höheren oder verringerten Kraftstoffverbrauch detailliert erfasst werden können, wenn die prozentualen Beiträge der physikalischen Teilenergien im Einzelnen untersucht werden. Auf Basis eines Abweichungsmaßes, beispielsweise mit den Farben Grün, Gelb und Rot, lassen sich beispielsweise folgende Ursachen unterscheiden: externe Fahrwiderstände, beispielsweise Stau oder Gebirge, interne Fahrwiderstände, beispielsweise Brems- und Beschleunigungsverhalten des Fahrers, einschließlich vorausschauendes Fahren, und technische Probleme des Fahrzeugs, wenn beispielsweise der Geschwindigkeitsverlauf keine Unregelmäßigkeiten aufweist, aber trotzdem hohe Abweichungen von einem Referenz- oder Normwert auftreten. Eine Mustererkennung auf Grundlage der Abweichungen in Fig. 6 und Fig. 7 erlaubt somit direkte Rückschlüsse auf die Ursachen und ist somit eine Hilfe für die Einsatzplanung.

Zur Implementierung kann eine zentrale Datenverarbeitungseinrichtung oder Plattform eingesetzt werden, welche die Bewegungscharakteristik des Fahrzeugs in Echtzeit analysiert. Dabei können eine Zuladung oder Fracht des Fahrzeugs, eine Position des Fahrzeugs, eine Höhe des Fahrzeugs, eine Steigung oder ein Gefälle der Fahrstrecke, aktuelle und kumulierte $CO_2$ Emissionen des Fahrzeugs, sowie ein aktueller und kumulierter Kraftstoffverbrauch des Fahrzeugs erfasst werden.

Ein mobiles Kommunikationsgerät kann eine Erfassungseinrichtung mit einer Ortungseinheit zur Bestimmung der Position des Fahrzeugs, der Zeit und des Geschwindigkeitsverlaufs des Fahrzeugs (x, y, z, t, v) umfassen, welche nach einem definierten Sendezeitintervall an eine Datenverarbeitungseinrichtung oder Datenzentrale geschickt werden. In der Datenverarbeitungseinrichtung oder Datenzentrale können die physikalischen Fahrzeugparameter, und/oder die Standarddaten einer Fahrzeugkonfiguration hinterlegt sein. Fahrzeug-spezifisch können auch Referenzfahrzyklen und aus dem Flottenbetrieb bekannte mittlere Kraftstoffverbrauchswerte in einer Datenbank gespeichert sein.

Die exemplarisch in Fig. 6 und Fig. 7 gezeigten Abweichungen erlauben eine detaillierte Bestimmung der positiven und/oder negativen Kraftstoffverbrauchswerte, d.h. eines Mehrverbrauchs oder einer Einsparung eines Fahrzeugs oder eines Fahrers. Einem Disponenten erlaubt diese Analyse eine Optimierung der Routen- und Einsatzplanung. Neben dem Kraftstoffverbrauch können auch die $CO_2$ Emissionen erfasst werden, da 1 Liter Kraftstoff etwa 2,4 kg $CO_2$ entspricht. Der Kraftstoffverbrauch und die $CO_2$ Emissionen können in der Datenbank gespeichert werden.

Neben der Erfassung in der Datenverarbeitungseinrichtung besteht außerdem die Möglichkeit, dem Fahrer des Fahrzeugs die Ergebnisse der vergangenen Sekunden als Kontrollinformation und Fahrstilassistenz direkt auf einem Display anzuzeigen. Die physikalischen Teilenergien können dem Fahrer in Form eines Balkendiagramms angezeigt werden, wobei eine Farbkodierung die relative Energie in Prozent anzeigen kann. Auch andere graphische Darstellungen sind für eine Fahrerassistenz möglich.

Zusätzlich kann eine Übersicht über den Kraftstoffverbrauch und die $CO_2$ Emissionen direkt über das Internet zugänglich gemacht werden, um eine transparente Datenhaltung für Fahrer, Unternehmen und Kunden zu ermöglichen. Somit können die $CO_2$ Emissionen des Fahrzeugs, und eine jährliche Reduktion pro Ladung und Transport in Echtzeit nachverfolgt werden. Dadurch kann ein transparentes MRV (Monitoring-Reporting-Verification) Berichtstool realisiert werden.

Ein Bericht an einen Disponenten kann beispielsweise folgende Angaben umfassen: eine gesamte Fahrstrecke des Fahrzeugs, einen durchschnittlichen Kraftstoffverbrauch des Fahrzeugs, $CO_2$ Emissionen des Fahrzeugs, einen Fahrtzeitverlust, eine durchschnittliche Geschwindigkeit des Fahrzeugs, ein Ranking des Fahrers, einen Bremsindex, eine Kraftstoffeinsparung des Fahrzeugs in Litern, eine relative Beschleunigungs- und Bremsteilenergie, eine relative Luftwiderstandsteilenergie, eine relative Rollwiderstandsteilenergie, eine relative Stillstandteilenergie, eine relative Steigungsteilenergie, und einen Eco-Index.

Da 1 Liter Kraftstoff etwa 2,4 kg $CO_2$ Emissionen entsprechen kann, lassen sich die erfassten Werte nutzen, um eine Schätzung der Durchschnittskraftstoffverbrauchswerte in L/100km pro Fahrzeug, beispielsweise für einen leeren Lastkraftwagen, einen halbbeladenen Lastkraftwagen oder einen vollbeladenen Lastkraftwagen, zu ermitteln.

Der Kraftstoffverbrauch kann aus den Spritkosten ermittelt und mit der Transportleistung, beispielsweise in Tonnen-Kilometer, verglichen werden. Dies kann pro Woche, Monat, und/oder Jahr erfolgen. Unter Verwendung von Satellitennavigationsdaten können Schätzungen pro Fahrt bestimmt werden und die Informationen aus Tankquittungen um Informationen aus Fahrprofilen ergänzt werden. Somit kann eine Zuordnung zu Fahrstil, aber auch zu Verkehrsstörungen, oder zum Einfluss von Steigungen und Gefällen erfolgen. Die Durchschnittswerte erhalten somit mehr Informationsgehalt und ermöglichen den Einsatz besserer Strategien zum Einsparen von Kraftstoff, beispielsweise mittels Routenwahl, Eco-Drive, und/oder Start-Stop-Automatik.

Gemäß einer Ausführungsform betrifft die Erfindung ein Verfahren zur Messung von Trägheitswiderständen auf Basis von Satellitendaten sowie eine Vorrichtung zur Durchführung des Verfahrens zur Verringerung von Kraftstoffverbrauch und Schadstoffausstoß bei Transport- und Verkehrsunternehmen.

BEZUGSZEICHENLISTE

100 Verfahren zum Erfassen einer Bewegungscharakteristik eines Fahrzeugs
101 Erfassen eines Geschwindigkeitsverlaufs des Fahrzeugs
103 Bestimmen einer Anzahl von auf das Fahrzeug einwirkenden Kräften
105 Bestimmen einer Fahrzeugenergie
107 Vergleichen der Fahrzeugenergie des Fahrzeugs mit einer Referenzenergie

200 Mobiles Kommunikationsgerät

201     Erfassungseinrichtung
203     Prozessor

300     System
301     Datenverarbeitungseinrichtung
303     Kommunikationsschnittstelle
305     Prozessor
307     Kommunikationsnetzwerk
309     Mobiles Kommunikationsgerät
311     Erfassungseinrichtung
313     Prozessor
315     Kommunikationsschnittstelle

400     Diagramm

500     Diagramm

601     Diagramm
603     Tabelle

701     Diagramm
703     Tabelle

**Patentansprüche**

1. Verfahren (100) zum Erfassen einer Bewegungscharakteristik eines Fahrzeugs, mit:

   Erfassen (101) eines Geschwindigkeitsverlaufs des Fahrzeugs innerhalb eines vorbestimmten Zeitintervalls;
   Bestimmen (103) einer Anzahl von auf das Fahrzeug einwirkenden Kräften auf der Basis des Geschwindigkeitsverlaufs des Fahrzeugs und zumindest eines physikalischen Fahrzeugparameters;
   Bestimmen (105) einer Fahrzeugenergie auf der Basis der Anzahl der auf das Fahrzeug einwirkenden Kräfte innerhalb des vorbestimmten Zeitintervalls; und
   Vergleichen (107) der Fahrzeugenergie des Fahrzeugs mit einer Referenzenergie, um die Bewegungscharakteristik des Fahrzeugs innerhalb des vorbestimmten Zeitintervalls zu erfassen.

2. Verfahren (100) nach Anspruch 1, wobei die Anzahl der auf das Fahrzeug einwirkenden Kräfte zumindest eine der folgenden Kräfte umfasst: eine Beschleunigungskraft, wobei der Fahrzeugparameter eine Masse des Fahrzeugs umfasst; eine Bremskraft, wobei der Fahrzeugparameter eine Masse des Fahrzeugs und einen Vortriebskoeffizienten des Fahrzeugs umfasst; eine Luftwiderstandskraft, wobei der Fahrzeugparameter eine Querschnittsfläche des Fahrzeugs und einen Luftwiderstandsbeiwert des Fahrzeugs umfasst; oder eine Rollwiderstandskraft, wobei der Fahrzeugparameter eine Masse des Fahrzeugs und einen Rollreibungskoeffizienten des Fahrzeugs umfasst.

3. Verfahren (100) nach einem der vorstehenden Ansprüche, wobei das Erfassen (101) des Geschwindigkeitsverlaufs des Fahrzeugs innerhalb des vorbestimmten Zeitintervalls ein Erfassen eines geographischen Höhenverlaufs des Fahrzeugs innerhalb des vorbestimmten Zeitintervalls umfasst, wobei die Anzahl der auf das Fahrzeug einwirkenden Kräfte eine Steigungskraft umfasst, wobei die Steigungskraft auf Basis des geographischen Höhenverlaufs des Fahrzeugs und einer Masse des Fahrzeugs bestimmt wird, und wobei die Fahrzeugenergie ferner auf der Basis der Steigungskraft innerhalb des vorbestimmten Zeitintervalls bestimmt wird.

4. Verfahren (100) nach einem der vorstehenden Ansprüche, wobei im Schritt des Bestimmens (105) der Fahrzeugenergie für jede auf das Fahrzeug einwirkende Kraft eine Teilenergie bestimmt wird, oder wobei im Schritt des Bestimmens (105) der Fahrzeugenergie eine Gesamtenergie für eine Summe der auf das Fahrzeug einwirkenden Kräfte bestimmt wird.

5. Verfahren (100) nach einem der vorstehenden Ansprüche, wobei das Bestimmen (105) der Fahrzeugenergie innerhalb des vorbestimmten Zeitintervalls ein Bestimmen einer Fahrstrecke des Fahrzeugs innerhalb des vorbestimmten Zeitintervalls auf der Basis des Geschwindigkeitsverlaufs des Fahrzeugs umfasst, und wobei das Bestimmen (105) der Fahrzeugenergie innerhalb des vorbestimmten Zeitintervalls ferner ein Gewichten der Fahrzeugenergie mit der Fahrstrecke umfasst.

6. Verfahren (100) nach einem der vorstehenden Ansprüche, mit:

Bereitstellen eines vorbestimmten Referenzgeschwindigkeitsverlaufs des Fahrzeugs innerhalb eines vorbestimmten Referenzzeitintervalls;
Bestimmen einer Anzahl von auf das Fahrzeug einwirkenden Referenzkräften auf der Basis des Referenzgeschwindigkeitsverlaufs des Fahrzeugs und zumindest eines physikalischen Fahrzeugparameters; und
Bestimmen der Referenzenergie auf der Basis der Anzahl der auf das Fahrzeug einwirkenden Referenzkräfte innerhalb des vorbestimmten Referenzzeitintervalls.

7. Verfahren (100) nach Anspruch 6, wobei im Schritt des Bestimmens der Referenzenergie für jede auf das Fahrzeug einwirkende Referenzkraft eine Referenzteilenergie bestimmt wird, oder wobei im Schritt des Bestimmens der Referenzenergie eine Referenzgesamtenergie für eine Summe der auf das Fahrzeug einwirkenden Referenzkräfte bestimmt wird.

8. Verfahren (100) nach Anspruch 6 oder 7, wobei das Bestimmen der Referenzenergie innerhalb des vorbestimmten Referenzzeitintervalls ein Bestimmen einer Referenzfahrstrecke des Fahrzeugs innerhalb des vorbestimmten Referenzzeitintervalls auf der Basis des Referenzgeschwindigkeitsverlaufs des Fahrzeugs umfasst, und wobei das Bestimmen der Referenzenergie innerhalb des vorbestimmten Referenzzeitintervalls ferner ein Gewichten der Referenzenergie mit der Referenzfahrstrecke umfasst.

9. Verfahren (100) nach Anspruch 6, 7 oder 8, wobei der vorbestimmte Referenzgeschwindigkeitsverlauf durch einen vorbestimmten Referenzfahrzyklus gebildet wird, und wobei der Referenzfahrzyklus einen der folgenden Fahrzyklen umfasst: einen städtischen Fahrzyklus, einen außerstädtischer Fahrzyklus, oder einen Fahrzyklus mit konstanter Geschwindigkeit.

10. Verfahren (100) nach einem der Ansprüche 6 bis 9, wobei das Bereitstellen des vorbestimmten Referenzgeschwindigkeitsverlaufs des Fahrzeugs ein Auswählen des vorbestimmten Referenzgeschwindigkeitsverlaufs aus einer Mehrzahl von vorbestimmten Referenzgeschwindigkeitsverläufen in Abhängigkeit von dem erfassten Geschwindigkeitsverlauf des Fahrzeugs umfasst.

11. Verfahren (100) nach einem der vorstehenden Ansprüche, wobei der zumindest eine physikalische Fahrzeugparameter einen der folgenden Fahrzeugparameter umfasst: eine Masse des Fahrzeugs, einen Vortriebskoeffizienten des Fahrzeugs, eine Querschnittsfläche des Fahrzeugs, einen Luftwiderstandsbeiwert des Fahrzeugs, oder einen Rollreibungskoeffizienten des Fahrzeugs.

12. Verfahren (100) nach einem der vorstehenden Ansprüche, wobei der Fahrzeugenergie des Fahrzeugs ein Kraftstoffverbrauch des Fahrzeugs zugeordnet ist, wobei der Referenzenergie ein Referenzkraftstoffverbrauch zugeordnet ist, und wobei das Vergleichen (107) der Fahrzeugenergie des Fahrzeugs mit der Referenzenergie ein Vergleichen des Kraftstoffverbrauchs des Fahrzeugs mit dem Referenzkraftstoffverbrauch umfasst, um eine Kraftstoffverbrauchscharakteristik des Fahrzeugs zu erfassen.

13. Mobiles Kommunikationsgerät (200) zum Erfassen einer Bewegungscharakteristik eines Fahrzeugs, mit:

einer Erfassungseinrichtung (201), welche ausgebildet ist, einen Geschwindigkeitsverlauf des Fahrzeugs innerhalb eines vorbestimmten Zeitintervalls zu erfassen; und
einem Prozessor (203), welcher ausgebildet ist, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen.

14. Datenverarbeitungseinrichtung (301) zum Erfassen einer Bewegungscharakteristik eines Fahrzeugs, wobei die Datenverarbeitungseinrichtung (301) mit einem mobilen Kommunikationsgerät (309) über ein Kommunikationsnetzwerk (307) verbindbar ist, wobei das mobile Kommunikationsgerät (309) ausgebildet ist, einen Geschwindigkeitsverlauf des Fahrzeugs innerhalb eines vorbestimmten Zeitintervalls zu erfassen, wobei das mobile Kommunikationsgerät (309) ferner ausgebildet ist, den Geschwindigkeitsverlauf des Fahrzeugs über das Kommunikationsnetzwerk (307) an die Datenverarbeitungseinrichtung (301) zu übertragen, mit:

einer Kommunikationsschnittstelle (303), welche ausgebildet ist, den Geschwindigkeitsverlauf des Fahrzeugs von dem mobilen Kommunikationsgerät (309) über das Kommunikationsnetzwerk (307) zu empfangen; und einem Prozessor (305), welcher ausgebildet ist, eine Anzahl von auf das Fahrzeug einwirkenden Kräften auf der Basis des Geschwindigkeitsverlaufs des Fahrzeugs und zumindest eines physikalischen Fahrzeugparameters zu bestimmen, eine Fahrzeugenergie auf der Basis der Anzahl der auf das Fahrzeug einwirkenden Kräfte innerhalb des vorbestimmten Zeitintervalls zu bestimmen, und die Fahrzeugenergie des Fahrzeugs mit einer Referenzenergie zu vergleichen, um die Bewegungscharakteristik des Fahrzeugs innerhalb des vorbestimmten Zeitintervalls zu erfassen.

15. Datenverarbeitungseinrichtung (301) nach Anspruch 14, welche eine Datenbank umfasst, wobei die Datenbank ausgebildet ist, einen vorbestimmten Referenzgeschwindigkeitsverlauf des Fahrzeugs innerhalb eines vorbestimmten Referenzzeitintervalls bereitzustellen, wobei der Prozessor (305) ferner ausgebildet ist, eine Anzahl von auf das Fahrzeug einwirkenden Referenzkräften auf der Basis des Referenzgeschwindigkeitsverlaufs des Fahrzeugs und zumindest eines physikalischen Fahrzeugparameters zu bestimmen, und die Referenzenergie auf der Basis der Anzahl der auf das Fahrzeug einwirkenden Referenzkräfte innerhalb des vorbestimmten Referenzzeitintervalls zu bestimmen.

16. Datenverarbeitungseinrichtung (301) nach Anspruch 14 oder 15, wobei der Prozessor (305) ferner ausgebildet ist, eine Abweichung der Fahrzeugenergie des Fahrzeugs von der Referenzenergie zu bestimmen, um ein Abweichungsmaß zu erhalten, und wobei die Kommunikationsschnittstelle (303) ferner ausgebildet ist, das Abweichungsmaß über das Kommunikationsnetzwerk (307) an das mobile Kommunikationsgerät (309) auszusenden.

17. System (300) zum Erfassen einer Bewegungscharakteristik eines Fahrzeugs, mit:

einer Datenverarbeitungseinrichtung (301) zum Erfassen einer Bewegungscharakteristik eines Fahrzeugs nach einem der Ansprüche 14 bis 16; und einem mobilen Kommunikationsgerät (309), welches ausgebildet ist, einen Geschwindigkeitsverlauf des Fahrzeugs innerhalb eines vorbestimmten Zeitintervalls zu erfassen, und den Geschwindigkeitsverlauf des Fahrzeugs über ein Kommunikationsnetzwerk (307) an die Datenverarbeitungseinrichtung (301) zu übertragen.

18. Computerprogramm mit einem Programmcode zum Ausführen des Verfahrens (100) nach einem der Ansprüche 1 bis 12, wenn der Programmcode auf einem Computer ausgeführt wird.

Fig. 1

Fig. 2

Fig. 3

**[km/h] vs [sec]**

Fig. 4

400

**[km/h]**

Fig. 5

500

LPH (+16,1/+300%); 7km/h; STS(+300%)

| | LPH | ACC | ROL | AER | STS | GRD |
|------|------|-----|------|------|------|-----|
| HIGH | 300% | | | | 300% | |
| AVG | | | | | | |
| LOW | | 12% | 10% | 1% | | |

601           603

Fig. 6

Fig. 7

Europäisches
Patentamt

European
Patent Office

Office européen
des brevets

**EUROPÄISCHER RECHERCHENBERICHT**

**Nummer der Anmeldung**

EP 14 15 7140

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | US 2007/239322 A1 (MCQUADE CHARLES MICHAEL [US] ET AL) 11. Oktober 2007 (2007-10-11) * Absatz [0027] - Absatz [0032]; Abbildungen 1-5 * ----- | 1-18 | INV. G06Q30/06 G07C5/00 G06Q30/02 |
| A | C. SENTOUH ET AL: "Advanced vehicle-infrastructure-driver speed profile for road departure accident prevention", VEHICLE SYSTEM DYNAMICS, Bd. 44, Nr. sup1, 1. Januar 2006 (2006-01-01), Seiten 612-623, XP055146874, ISSN: 0042-3114, DOI: 10.1080/00423110600879395 * Zusammenfassung; Abbildungen 1,2 * ----- | 1-18 | |
| A | EP 2 116 968 A1 (AIRMAX REMOTE LTD [GB]) 11. November 2009 (2009-11-11) * Abbildung 1 * ----- | 1-18 | |
| A | WO 2004/077283 A2 (ACCULEON INC [US]) 10. September 2004 (2004-09-10) * Seite 23 - Seite 24 * ----- | 1-18 | RECHERCHIERTE SACHGEBIETE (IPC) G06Q G07C |
| A | WO 2013/104805 A1 (PULSE FUNCTION F6 LTD [IE]) 18. Juli 2013 (2013-07-18) * Abbildungen 1-4 * ----- | 1-18 | |
| A | EP 2 375 385 A1 (PROZESS CONTROL GMBH [DE]) 12. Oktober 2011 (2011-10-12) * Zusammenfassung; Abbildungen 1-5 * ----- | 1-18 | |

Der vorliegende Recherchenbericht wurde für alle Patentansprüche erstellt

| Recherchenort | Abschlußdatum der Recherche | Prüfer |
|---|---|---|
| München | 15. Oktober 2014 | Liendl, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                          
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 14 15 7140

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2014

| Im Recherchenbericht angeführtes Patentdokument | Datum der Veröffentlichung | Mitglied(er) der Patentfamilie | Datum der Veröffentlichung |
|---|---|---|---|
| US 2007239322 A1 | 11-10-2007 | KEINE | |
| EP 2116968 A1 | 11-11-2009 | KEINE | |
| WO 2004077283 A2 | 10-09-2004 | US 2004236474 A1<br>US 2004236475 A1<br>US 2004236476 A1<br>US 2004236596 A1<br>WO 2004077283 A2 | 25-11-2004<br>25-11-2004<br>25-11-2004<br>25-11-2004<br>10-09-2004 |
| WO 2013104805 A1 | 18-07-2013 | AU 2012364960 A1<br>AU 2013208896 A1<br>CA 2863098 A1<br>CA 2863229 A1<br>CN 104054118 A<br>CN 104093618 A<br>WO 2013104805 A1<br>WO 2013105869 A1 | 31-07-2014<br>31-07-2014<br>18-07-2013<br>18-07-2013<br>17-09-2014<br>08-10-2014<br>18-07-2013<br>18-07-2013 |
| EP 2375385 A1 | 12-10-2011 | EP 2375385 A1<br>WO 2011124546 A1 | 12-10-2011<br>13-10-2011 |

EPO FORM P0461

Für nähere Einzelheiten zu diesem Anhang : siehe Amtsblatt des Europäischen Patentamts, Nr.12/82